# EUROPÄISCHE PATENTSCHRIFT

(11) **EP 2 830 277 B1**
(45) Veröffentlichungstag und Bekanntmachung des Hinweises auf die Patenterteilung: **30.10.2019**
(21) Anmeldenummer: 14168097.5
(22) Anmeldetag: 13.05.2014
(51) Int. Cl.: H04L 29/06

(54) **VERFAHREN UND SYSTEM ZUR MANIPULATIONSSICHEREN ÜBERTRAGUNG VON DATENPAKETEN**
METHOD AND SYSTEM FOR TAMPER-PROOF TRANSMISSION OF DATA PACKETS
PROCÉDÉ ET SYSTÈME DE TRANSMISSION INVIOLABLE DE PAQUETS DE DONNÉES

(30) Priorität: 24.07.2013 DE 102013214415; 08.10.2013 DE 102013220246
(43) Veröffentlichungstag der Anmeldung: 28.01.2015
(73) Patentinhaber: Rohde & Schwarz SIT GmbH, 12489 Berlin (DE)
(72) Erfinder: Grawunder, Torsten, 12589 Berlin (DE); Kultermann, Bernd, 13053 Berlin (DE)
(74) Vertreter: Körfer, Thomas

(56) Entgegenhaltungen:
- FR-A1- 2 918 779
- US-A1- 2010 131 750
- US-A1- 2011 231 654
- KENT K SEO BBN TECHNOLOGIES S: "Security Architecture for the Internet Protocol; rfc4301.txt", 20051201, 1. Dezember 2005 (2005-12-01), XP015043220, ISSN: 0000-0003
- Anonymous: "Authenticated encryption - Wikipedia, the free encyclopedia", , 9 May 2013 (2013-05-09), XP055440511, Retrieved from the Internet: URL:https://web.archive.org/web/2013050909 3454/https://en.wikipedia.org/wiki/Authent icated_encryption [retrieved on 2018-01-12]

## Beschreibung

Die Erfindung betrifft ein Verfahren und ein System zur manipulationssicheren Übertragung von Datenpaketen zwischen Netzwerken mit jeweils unterschiedlicher Übertragungssicherheit.

Öffentliche Netzwerke, wie beispielsweise das Internet, weisen typischerweise eine geringere Übertragungssicherheit auf als lokale, unternehmensinterne oder andere speziell geschützte Netzwerke. Netzwerke mit geringer Übertragungssicherheit werden in der vorliegenden Schrift als schwarze Netzwerke bezeichnet, während Netzwerke mit höherer Übertragungssicherheit als rote Netze bezeichnet werden.

Um Daten oder Informationen von einem sendenden Netzknoten in einem roten Netzwerk mit einer vergleichsweise hohen Übertragungssicherheit zu einem empfangenden Netzknoten in einem schwarzen Netzwerk mit einer vergleichsweise geringen Übertragungssicherheit über die ganze Übertragungsstrecke sicher zu übertragen, werden diese, wie aus der DE 10 2005 050 174 A1 hervorgeht, an der Übergangsstelle zwischen rotem und schwarzem Netzwerk typischerweise in einem Gateway oder in einem Router geeignet verschlüsselt. Korrespondierend werden Daten oder Informationen von einem sendenden Netzknoten in einem schwarzen Netzwerk zu einem empfangenden Netzknoten in einem roten Netzwerk an der Übergangsstelle zwischen schwarzem und rotem Netzwerk entsprechend wieder entschlüsselt.

Ein System zur Übertragung von Datenströmen zwischen Netzwerken mit verschiedenen Sicherheits-Niveaus (schwarz und rot) wird in der Druckschrift FR 2 918 779 A1 gezeigt. Zwischen Datennetzen ist jeweils eine Ver- und Entschlüsselungseinheiten für jeweils eine Ent- oder Verschlüsselung eines Datenstromes zwischen zwei zugehörigen Datennetzen vorgesehen. Die zu verbindenden Datennetze sind über Netzwerkschnittstellen mittels einem sicheren Datenschalter miteinander verbunden. Der sichere Datenschalter umfasst eine zweite Ver- und Entschlüsselungseinheiten, die alle Datenpakete, die mittels des Datenschalters zwischen den Netzwerkschnittstellen und den Ver- und Entschlüsselungseinheiten geschaltet werden, ver- und entschlüsseln können.

In der Druckschrift US 2010/01317450 A1 ist ein Kryptographie-System beschrieben, welches ausgehende Nachrichten verschlüsselt und eingehende Nachrichten entschlüsselt. Das System beinhaltet einen sogenannten IP Stack, der eine zu verschickende unverschlüsselte Nachricht empfängt und diese für eine Verschlüsselung vorbereitet. Diese vorbereitete Nachricht wird an eine erste Verschlüsselungseinheit Crypto Outbound gesendet, durch einen definierten Verschlüsselungsalgorithmus und einen Schlüssel verschlüsselt und an ein gewünschtes schwarzes Netzwerk gesendet. Eine verschlüsselte Nachricht wird vom IP Stack empfangen, umgeformt und zu einer separaten zweiten Entschlüsselungseinheit Crypto Inbound gesendet. Mittels der Entschlüsselungseinheit wird unter Verwendung eines Entschlüsselungsalgorithmus und des Schlüssels aus der verschlüsselten eingehenden Nachricht, eine Klartext Nachricht ermittelt.

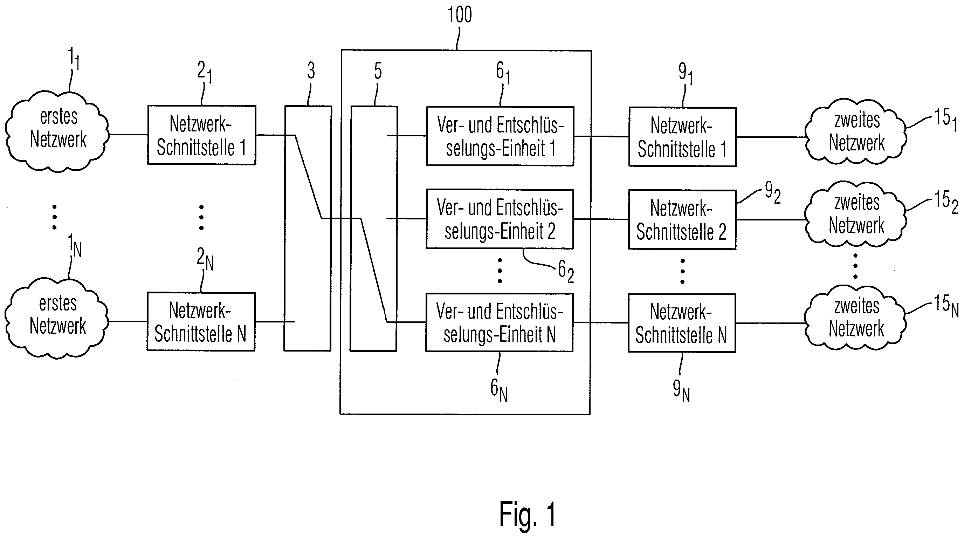

Bei einer Datenübertragung zwischen mindestens einem schwarzen Netzwerk und einem oder mehreren roten Netzwerken mit jeweils unterschiedlicher Übertragungssicherheit - beispielsweise ein erstes rotes Netzwerk mit besonders vertraulichen Daten, ein zweites rotes Netzwerk mit durchschnittlich vertraulichen Daten und ein drittes rotes Netzwerk mit weniger vertraulichen Daten - sind mehrere Ver- und Entschlüsselungseinheiten erforderlich, die jeweils die Transformation der Daten zwischen einem der schwarzen Netzwerke und jeweils einem der roten Netzwerke abbilden. Aus Kostengründen können die einzelnen Ver- und Entschlüsselungseinheiten 6₁, 6₂ bis 6_{N}, wie in Fig. 1 dargestellt ist, in einem einzigen Gerät 100 integriert werden. Die Verschaltung eines der schwarzen Netzwerke 1₁ bis 1_{N} mit einer der Ver- und Entschlüsselungseinheiten 6₁, 6₂ bis 6_{N}, die den einzelnen roten Netzwerken 15₁, 15₂ bis 15_{N} zugeordnet sind, kann, wie ebenfalls in Fig. 1 dargestellt ist, über eine Einheit 5, die in der einen Richtung als Multiplexer und in der anderen Richtung als Demultiplexer arbeitet, erfolgen.

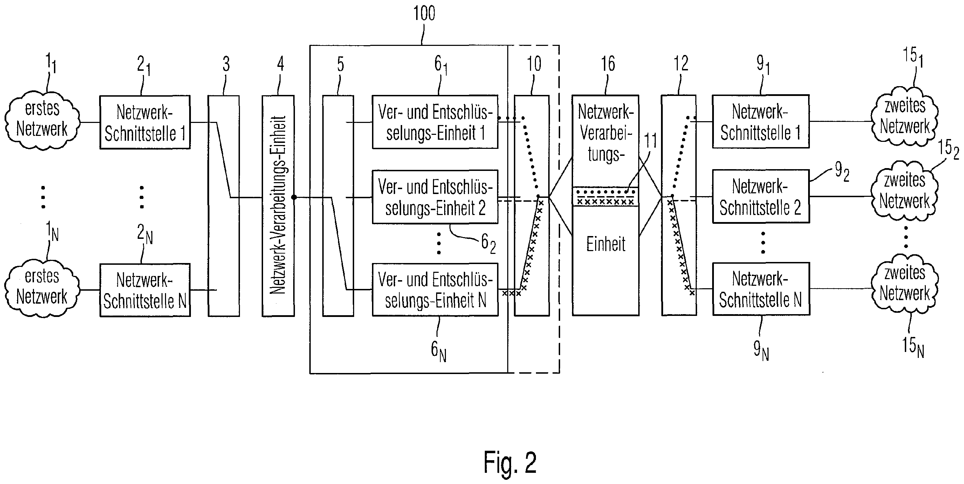

Ein zusätzliches Kosteneinsparungspotenzial lässt sich erzielen, wenn die dedizierte elektrische Verbindung, die, wie in Fig. 1 dargestellt ist, jeweils zwischen einer einem einzelnen roten Netzwerk 15₁, 15₂ bis 15_{N} jeweils zugeordneten Ver- und Entschlüsselungseinheit 6₁, 6₂ bis 6_{N} und einer demselben roten Netzwerk 15₁, 15₂ bis 15_{N} ebenfalls jeweils zugeordneten Netzwerk-Schnittstelle 9₁, 9₂ bis 9_{N} besteht, durch eine einzige gemeinsame elektrische Verbindung über einen einzigen physikalischen Übertragungskanal 11 für alle Ver- und Entschlüsselungseinheiten 6₁, 6₂ bis 6_{N} und für alle Netzwerk-Schnittstellen 9₁, 9₂ bis 9_{N} realisiert ist, wie aus Fig. 2 hervorgeht. Hierzu ist zwischen dem einzigen physikalischen Übertragungskanal 11 und den einzelnen Ver- und Entschlüsselungseinheiten 6₁, 6₂ bis 6_{N} der rote Netzwerke 15₁, 15₂ bis 15_{N} sowie zwischen dem einzigen physikalischen Übertragungskanal 11 und den einzelnen Netzwerk-Schnittstellen 9₁, 9₂ bis 9_{N} der roten Netzwerke 15₁, 15₂ bis 15_{N} jeweils eine Einheit 10 und 12 geschaltet, die in der einen Richtung als Multiplexer und in der anderen Richtung als Demultiplexer arbeitet. Die Einheiten zum Multiplexen bzw. Demultiplexen 3 und 5 zwischen den schwarzen Netzwerken 1₁ bis 1_{N} und den einzelnen Ver- und Entschlüsselungseinheiten 6₁, 6₂ bis 6_{N} sind ebenfalls, wie in Fig. 2 dargestellt ist, in einem einzigen Gerät 100 integriert.

Zusätzlich kann auch der Multiplexer bzw. Demultiplexer 10 zwischen den einzelnen Ver- und Entschlüsselungseinheiten 6₁, 6₂ bis 6_{N} und dem gemeinsamen physikalischen Übertragungskanal 11, wie in Fig. 2 durch gestrichelte Linien angedeutet ist, in dem einzigen Gerät 100 integriert sein.

Für die Datenübertragung von Datenpaketen vom einem schwarzen Netzwerk 1₁ bis 1_{N} zu einem roten Netzwerk 15₁, 15₂ bis 15_{N} ist, wie ebenfalls aus Fig. 2 hervorgeht, zwischen den Netzwerk-Schnittstellen 2₁ bis 2_{N} der schwarzen Netzwerke 1₁ bis 1_{N} und den Einheiten 3 und 5 zum Multiplexen bzw. Demultiplexen eine Netzwerk-Verarbeitungs-Einheit 4 vorgesehen, die einerseits das Routing des Datenpakets von einer Netzwerk-Schnittstelle 2₁ bis 2_{N} eines als Quell-Netzwerk dienenden schwarzen Netzes 1₁ bis 1_{N} zur Ver- und Entschlüsselungseinheit 6₁, 6₂ bis 6_{N} des als Ziel-Netzwerk vorgesehenen roten Netzes 15₁, 15₂ bis 15_{N} und andererseits die Planung des Entschlüsselungsvorgangs des Datenpakets in der zugehörigen Ver- und Entschlüsselungseinheit 6₁, 6₂ bis 6_{N} organisiert. Für die Datenübertragung von Datenpaketen von einem roten Netzwerk 15₁, 15₂ bis 15_{N} zu einem schwarzen Netzwerk 1₁ bis 1_{N} ist im Bereich des physikalischen Übertragungskanals 11 ebenfalls eine Netzwerk-Verarbeitungs-Einheit 16 für das Routing des Datenpakets von der Netzwerk-Schnittstelle 9₁, 9₂ bis 9_{N} des als Quell-Netzwerk dienenden roten Netzwerkes 15₁, 15₂ bis 15_{N} zur zum selben roten Netzwerkes 15₁, 15₂ bis 15_{N} gehörigen Ver- und Entschlüsselungseinheit 6₁, 6₂ bis 6_{N} und für die Planung des Verschlüsselungsvorgangs des Datenpakets in der zugehörigen Ver- und Entschlüsselungseinheit 6₁, 6₂ bis 6_{N} realisiert.

In einer Zuordnungstabelle werden die für das Routing und für das Ver- und Entschlüsseln eines Datenpakets benötigten Parametersätze für jeweils jeden Datentransfer des Datenpakets von bzw. zu einem der roten Netzwerke 15₁, 15₂ bis 15_{N} abgelegt. Auf diese Parametersätze greift die Netzwerk-Verarbeitungs-Einheit 4 und 16 zu. Bei Anwendung des internetbasierten Standards IPSec sind die Parametersätze beispielsweise in der Zuordnungstabelle Security-Association-Database (SAD) hinterlegt.

Die in den Zuordnungstabellen der Netzwerk-Verarbeitungs-Einheiten hinterlegten Parameter unterliegen einer Manipulation, die zu einer Fehlleitung von Datenpaketen zwischen den einzelnen Ver- und Entschlüsselungseinheiten 6₁, 6₂ bis 6_{N} und den einzelnen Netzwerk-Schnittstellen 9₁, 9₂ bis 9_{N} der roten Netzwerke 15₁, 15₂ bis 15_{N} führt. Eine gesicherte Übertragung von Datenpaketen im Sinne einer Übertragung des Datenpakets zwischen der korrekten Ver- und Entschlüsselungseinheit 6₁, 6₂ bis 6_{N} und der korrekten Netzwerk-Schnittstelle 9₁, 9₂ bis 9_{N} des jeweiligen roten Netzwerkes 15₁, 15₂ bis 15_{N}, d.h. einer Übertragung des Datenpakets auf einem korrekten logischen Übertragungskanal zwischen der jeweiligen Ver- und Entschlüsselungseinheit 6₁, 6₂ bis 6_{N} und der jeweiligen Netzwerk-Schnittstelle 9₁, 9₂ bis 9_{N} ist nachteilig nicht gegeben.

Aufgabe der Erfindung ist es deshalb, ein Verfahren und ein System zur sicheren Übertragung von Datenpaketen auf einem korrekten logischen Übertragungskanal zwischen einer zum jeweiligen roten Netz gehörigen Ver- und Entschlüsselungseinheit und einer zum selben roten Netz gehörigen Netzwerk-Schnittstelle zu schaffen.

Die Aufgabe wird durch ein erfindungsgemäßes Verfahren zum Übertragen eines verschlüsselten Datenpakets von mindestens einem schwarzen Netzwerk - im Folgenden als erstes Netzwerk bezeichnet - ohne Übertragungssicherheit zu mindestens einem roten Netzwerk - im folgenden als zweite Netzwerke bezeichnet - mit einer spezifischen Übertragungssicherheit mit den Merkmalen des Patentanspruchs 1, durch ein erfindungsgemäßes Verfahren zum Übertragen eines Datenpakets von mindestens einem zweiten Netzwerk mit jeweils einer spezifischen Übertragungssicherheit zu mindestens einem ersten Netzwerk ohne Übertragungssicherheit mit den Merkmalen des Patentanspruchs 2, durch ein erfindungsgemäßes System zum Übertragen eines Datenpakets zwischen mindestens einem ersten Netzwerk ohne Übertragungssicherheit und einem zweiten Netzwerk von mehreren zweiten Netzwerken mit jeweils einer spezifischen Übertragungssicherheit mit den Merkmalen des Patentanspruchs 13, durch ein Computerprogramm mit Programmcode-Mitteln mit den Merkmalen des Patentanspruchs 20 und durch ein Computerprogramm-Produkt mit den Merkmalen des Patentanspruchs 21 gelöst. Vorteilhafte technische Erweiterungen sind in den jeweils abhängigen Patentansprüchen aufgeführt.

Erfindungsgemäß wird zur manipulationssicheren Übertragung eines Datenpaketes auf einem korrekten logischen Übertragungskanal zwischen einer korrekten Ver- und Entschlüsselungseinheit und einer korrekten Netzwerk-Schnittstelle eines als Quell- oder Ziel-Netzwerk agierenden zweiten Netzwerks eine zum korrekten logischen Übertragungskanal gehörige Verschlüsselung des Datenpakets durchgeführt, die zur Unterscheidung zu der für die Übertragung im ersten Netzwerk erforderlichen ersten Verschlüsselung als zweite Verschlüsselung bezeichnet wird.

Diese zweite Verschlüsselung des im gemeinsamen physikalischen Übertragungskanal zu übertragenden Datenpakets dient nicht primär einer zusätzlichen Erhöhung der Vertraulichkeit des Inhalts des zu übertragenden Datenpakets im physikalischen Übertragungskanal, sondern dient der korrekten und damit sicheren Übertragung des Datenpakets zwischen der jeweiligen korrekten Netzwerk-Schnittstelle und der jeweiligen korrekten Ver- und Entschlüsselungseinheit des als Quell- oder Ziel-Netzwerk agierenden zweiten Netzwerks des Datenpakets. Dies entspricht einer Übertragung des Datenpakets über jeweils einen korrekten logischen Übertragungskanal.

Zur Durchführung der zweiten Ver- und Entschlüsselung ist sowohl auf der Seite der ersten Ver- und Entschlüsselungseinheit als auch auf der Seite der Netzwerk-Schnittstelle des zweiten Netzwerkes jeweils eine zweite Ver- und Entschlüsselungseinheit vorgesehen. Beiden zweiten Ver- und Entschlüsselungseinheiten ist jeweils die zweite Verschlüsselung bekannt, so dass durch eine Entschlüsselung des mit der zweiten Verschlüsselung verschlüsselten Datenpakets eine Überprüfung der Übertragung des Datenpakets im jeweils korrekten logischen Übertragungskanal möglich ist.

Bevorzugt wird zur zweiten Verschlüsselung des Datenpakets ein Schlüssel zum Ver- und Entschlüsseln des Datenpakets verwendet, der sowohl der Ver- und Entschlüsselungseinheit als auch der Netzwerk-Schnittstelle des zweiten Netzwerks, aus dem bzw. von dem das Datenpaket übertragen wird, bekannt ist.

In einer ersten Ausführungsform der Erfindung ist das für die zweite Verschlüsselung verwendete Verschlüsselungsverfahren bei allen Ver- und Entschlüsselungseinheiten und allen Netzwerk-Schnittstellen jedes zweiten Netzwerkes identisch. Auf diese Weise gestaltet sich die Initialisierung des erfindungsgemäßen Verfahrens vergleichsweise einfach. In einer zweiten Ausführungsform der Erfindung ist das für die zweite Verschlüsselung verwendete Verschlüsselungsverfahren bei jeder zu einem jeweiligen zweiten Netzwerk jeweils gehörigen zweiten Ver- und Entschlüsselungseinheit jeweils unterschiedlich. Auf diese Weise wird gegenüber der ersten Ausführungsform der Erfindung eine zusätzlich erhöhte Sicherheit gegenüber Manipulationen an der zweiten Verschlüsselung erzielt.

In einer weiteren bevorzugten Ausprägung der Erfindung ist die zweite Verschlüsselung im Transport-Verschlüsselungs-Modus realisiert. Im Gegensatz zum Tunnel-Verschlüsselung-Modus, bei dem das gesamte Datenpaket verschlüsselt wird und einen für die Zieladressierung des verschlüsselten Datenpakets erforderlichen neuen, d.h. äußeren, Internet-Protokoll-(IP)-Kopfteil (engl. IP-Header) erhält, wird beim Transport-Verschlüsselung-Modus lediglich der Nutzdaten-Teil des Datenpakets verschlüsselt. Auf diese Weise weist das Datenpaket für eine Überprüfung der Übertragung des Datenpakets im jeweils korrekten logischen Übertragungskanal neben der zweiten Verschlüsselung als weitere Überprüfungsmöglichkeit die im unverschlüsselten IP-Header enthaltene Ziel-Adresse auf.

Um eine Manipulation an den im logischen Übertragungskanal übertragenen Daten - Nutzdaten und Kontrolldaten - des Datenpakets und somit eine fehlende Integrität der im logischen Übertragungskanal übertragenen Daten des Datenpakets zu identifizieren, werden die Daten des zu übertragenden Datenpakets vor der zweiten Verschlüsselung bevorzugt einer Hash-Funktion zugeführt. Durch Integration einer Hash-Funktion in die zweite Verschlüsselung wird somit eine weitere Möglichkeit zur Identifizierung einer korrekten Übertragung eines Datenpaketes im jeweils korrekten Übertragungskanal realisiert.

Das Ergebnis der Hash-Funktion - ein Hash-Wert, der gegenüber dem Datenumfang des Datenpakets deutlich reduziert ist und dessen Wert-Änderung eine Änderung, d.h. eine Manipulation, an den Daten des Datenpakets signalisiert - wird zusammen mit den zu verschlüsselnden Daten des Datenpakets der zweiten Verschlüsselung unterworfen. Nach der Entschlüsselung des mit der zweiten Verschlüsselung verschlüsselten Datenpakets kann empfangsseitig durch Vergleich des entschlüsselten Hash-Wertes mit dem empfangsseitig ermittelten Hash-Wert der derselben Hash-Funktion unterworfenen entschlüsselten Daten des Datenpaketes auf Identität eine mögliche Manipulation an den Daten des übertragenen Datenpaketes identifiziert werden.

Eine weitere Möglichkeit, die Übertragungssicherheit eines Datenpakets hinsichtlich einer korrekten Übertragung im jeweils korrekten logischen Übertragungskanal zu erhöhen, stellt die bevorzugte Integration der Adresse der Netzwerk-Schnittstelle des zweiten Netzwerkes, von dem bzw. zu dem das Datenpaket transportiert wird, in die zweite Verschlüsselung dar.

In einer ersten Untervariante der bevorzugten Integration der Adresse der zum jeweiligen zweiten Netzwerk gehörigen Netzwerk-Schnittstelle in die zweite Verschlüsselung wird die Adresse der zum jeweiligen zweiten Netzwerk gehörigen Netzwerk-Schnittstelle als zusätzliches Kontroll-Datum zusammen mit dem zugehörigen Hash-Wert zu den übrigen Kontrolldaten und Nutzdaten des zu übertragenden Datenpakets der zweiten Verschlüsselung zugeführt. Beim Empfang des mit der zweiten Verschlüsselung verschlüsselten Datenpakets in der jeweiligen zweiten Ver- und Entschlüsselungseinheit kann vergleichsweise einfach nach der Entschlüsselung des entschlüsselten Hash-Wertes der Adresse der Netzwerk-Schnittstelle mit dem empfangsseitig ermittelten Hash-Wert der entschlüsselten Adresse die Netzwerk-Schnittstelle mit derselben Hash-Funktion auf Identität und damit die Korrektheit der Übertragung überprüft werden.

In einer zweiten Untervariante der bevorzugten Integration der Adresse der zum jeweiligen zweiten Netzwerk gehörigen Netzwerk-Schnittstelle in die zweite Verschlüsselung wird die zweite Verschlüsselung des zu übertragenden Datenpakets bevorzugt mit einem modifizierten Schlüssel durchgeführt, der sich aus der Verschlüsselung der Adresse der zum jeweiligen zweiten Netzwerk gehörigen Netzwerk-Schnittstelle mit dem ursprünglichen Schlüssel der zweiten Verschlüsselung ergibt. Die Verwendung eines derart modifizierten Schlüssels, die einerseits die Kenntnis des ursprünglichen Schlüssels der zweiten Verschlüsselung und die zusätzliche Kenntnis der Adresse der zum jeweiligen zweiten Netzwerk gehörigen Netzwerk-Schnittstelle erfordert, weist gegenüber der Verwendung des nichtmodifizierten Schlüssels zur zweiten Verschlüsselung eine höhere Sicherheit gegenüber Manipulation auf.

Eine weitere bevorzugte Maßnahme zur Erhöhung einer korrekten Übertragung eines Datenpakets im richtigen logischen Übertragungskanal zwischen der zum jeweiligen zweiten Netzwerk gehörigen korrekten Ver- und Entschlüsselungseinheit und der zum selben zweiten Netzwerk gehörigen korrekten Netzwerk-Schnittstelle liegt bevorzugt in der individuellen zweiten Verschlüsselung jedes einzelnen über den gemeinsamen physikalischen Übertragungskanal zu übertragenden Datenpakets.

Hierzu wird in einer ersten Untervariante der bevorzugten individuellen zweiten Verschlüsselung jedes einzelne Datenpaket, das zu einem zweiten Netzwerk oder von einem zweiten Netzwerk übertragen wird, mit einem individuellen Schlüssel verschlüsselt. Für die zweite Verschlüsselung des einzelnen Datenpakets eines zweiten Netzwerkes wird ein modifizierter Schlüssel verwendet, der sich aus der Verschlüsselung eines individuellen Sequenzwertes mit dem ursprünglichen Schlüssel der zweiten Verschlüsselung ergibt. Der individuelle Sequenzwert, der dem einzelnen zu übertragenden Datenpaket zugewiesen wird, ergibt sich beispielsweise aus einem einzelnen Zählerwert eines für das jeweilige zweite Netzwerk realisierten Zählers oder aus einem einzelnen Zeitwert eines für das jeweilige zweite Netzwerk realisierten Zeitgebers. Auf der jeweiligen Empfangsseite ist ebenfalls ein Zähler oder ein Zeitgeber realisiert, der bei Empfang des mit der zweiten Verschlüsselung verschlüsselten Datenpaketes einen zum in der zweiten Verschlüsselung integrierten Sequenzwert korrespondierenden Sequenzwert generiert, aus dem die Empfangsseite in Kombination mit dem ursprünglichen Schlüssel der zweiten Verschlüsselung den modifizierten Schlüssel zur Entschlüsselung des mit dem modifizierten Schlüssel in einer zweiten Verschlüsselung verschlüsselten Datenpakets entschlüsselt.

In einer zweiten Untervariante der bevorzugten individuellen zweiten Verschlüsselung wird der zum einzelnen zu bzw. von einem zweiten Netzwerk jeweils zu übertragenden Datenpaket jeweils gehörige Sequenzwert zusammen mit den übrigen Daten des Datenpaketes und einem Hash-Wert des zugehörigen Sequenzwertes der zweiten Verschlüsselung zugeführt. Nach der Entschlüsselung des empfangenen Datenpakets in der Empfangsseite und nach einem Vergleich des entschlüsselten Hash-Wertes des Sequenzwertes mit dem empfangsseitig ermittelten Hash-Wert des entschlüsselten Sequenzwerts auf Identität ist eine korrekte Übertragung des einzelnen Datenpakets im korrekten logischen Übertragungskanal nachweisbar.

Schließlich wird eine zusätzliche Individualisierung der zweiten Verschlüsselung jedes einzelnen übertragenen Datenpakets durch bevorzugte Verwendung eines Initialisierungsdatums beim Verschlüsselungsverfahren der zweiten Verschlüsselung, bei der in der zweiten Verschlüsselung integrierten Hash-Funktion, bei der in der zweiten Verschlüsselung integrierten Adresse der zum jeweiligen zweiten Netzwerk gehörigen Netzwerk-Schnittstelle und/oder bei der Generierung des Schlüssels oder des modifizierten Schlüssels der zweiten Verschlüsselung erzielt. Dieses Initialisierungsdatum wird beispielsweise in Zufallsgeneratoren generiert, die sende- und empfangsseitig in der zweiten Verschlüsselungs-Einheit integriert und miteinander synchronisiert sind.

In einer ersten Ausführungsform der Erfindung ist die zweite Ver- und Entschlüsselungseinheit auf beiden Seiten des gemeinsamen physikalischen Übertragungskanals in der ersten Ver- und Entschlüsselungseinheit integriert.

In einer zweiten Ausführungsform der Erfindung ist die zweite Ver- und Entschlüsselungseinheit auf beiden Seiten des gemeinsamen physikalischen Übertragungskanals der ersten Ver- und Entschlüsselungseinheit in Richtung des gemeinsamen physikalischen Übertragungskanals nachgeschaltet.

Bevorzugt sind alle ersten Ver- und Entschlüsselungseinheiten mit allen zweiten Ver- und Entschlüsselungseinheiten in einem einzigen Gerät integriert.

In einer zweiten bevorzugten Ausprägung der Erfindung sind zusätzlich die zur alternativen Verschaltung eines ersten Netzwerkes mit einer zu einem zweiten Netzwerk gehörigen ersten Ver- und Entschlüsselungseinheit erforderlichen Multiplexer bzw. Demultiplexer und die zur alternativen Verschaltung einer zu einem zweiten Netzwerk gehörigen ersten Ver- und Entschlüsselungseinheit mit dem gemeinsamen physikalischen Übertragungskanal erforderliche Multiplexer bzw. Demultiplexer in dem einzigen Gerät integriert.

Schließlich sind in einer dritten bevorzugten Ausprägung der Erfindung die zur alternativen Verschaltung des gemeinsamen physikalischen Übertragungskanals mit einem zu einem zweiten Netzwerk gehörigen Netzwerk-Schnittstelle vorgesehenen Multiplexer bzw. Demultiplexer in dem einzigen Gerät integriert.

Die einzelnen Ausführungsformen, Ausprägungen, Varianten und Untervarianten des erfindungsgemäßen Verfahrens und des erfindungsgemäßen Systems werden im Folgenden im Detail anhand der Zeichnung beispielhaft erläutert. Die Figuren der Zeichnung zeigen:
- Fig. 1: ein Blockdiagramm eines Systems zur Übertragung eines Datenpakets zwischen einem ersten Netzwerk ohne Übertragungssicherheit und einem zweiten Netzwerk mit einer spezifischen Übertragungssicherheit,
- Fig. 2: ein Blockdiagramm eines weiteren Systems zur Übertragung eines Datenpakets zwischen einem ersten Netzwerk ohne Übertragungssicherheit und einem zweiten Netzwerk mit einer spezifischen Übertragungssicherheit,
- Fig. 3: ein Blockdiagramm eines erfindungsgemäßen Systems zur Übertragung eines Datenpakets zwischen einem ersten Netzwerk ohne Übertragungssicherheit und einem zweiten Netzwerk mit einer spezifischen Übertragungssicherheit,
- Fig. 4: ein Flussdiagramm eines erfindungsgemäßen Verfahrens zum Übertragen eines verschlüsselten Datenpakets von einem ersten Netzwerk ohne Übertragungssicherheit zu einem zweiten Netzwerk mit einer spezifischen Übertragungssicherheit und
- Fig. 5: ein Flussdiagramm eines erfindungsgemäßen Verfahrens zum Übertragen eines Datenpakets von einem zweiten Netzwerk mit einer spezifischen Übertragungssicherheit zu einem ersten Netzwerk ohne spezifischer Übertragungssicherheit.

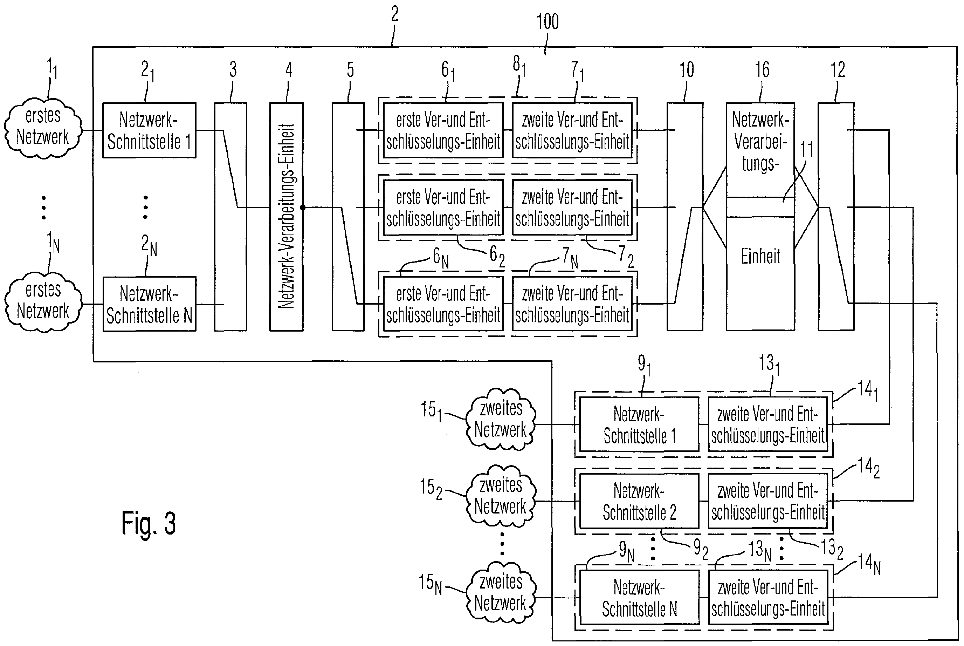

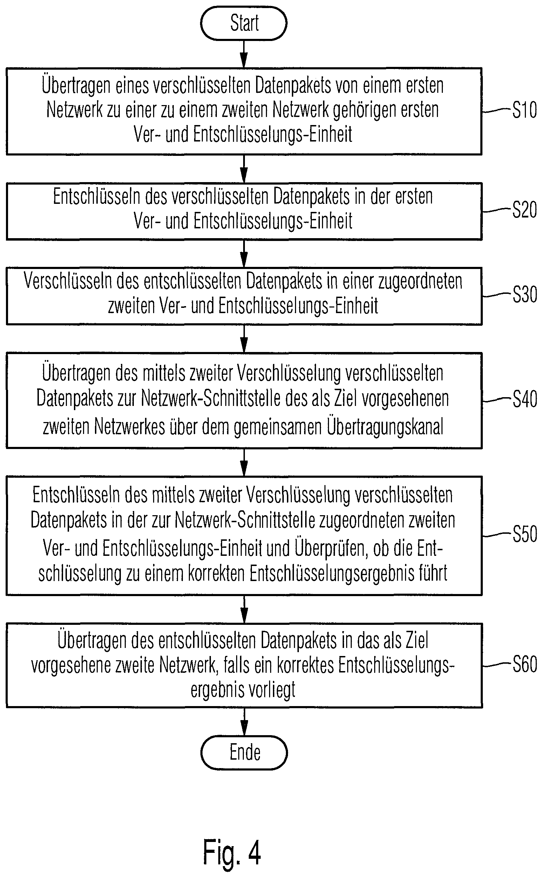

Im Folgenden wird das erfindungsgemäße Verfahren zum Übertragen eines verschlüsselten Datenpakets von einem ersten Netzwerk ohne Übertragungssicherheit zu einem zweiten Netzwerk mit einer spezifischen Übertragungssicherheit anhand des Flussdiagrammes in Fig. 4 in Verbindung mit dem erfindungsgemäßen System zur Übertragung eines Datenpakets zwischen einem ersten Netzwerk ohne Übertragungssicherheit und einem zweiten Netzwerk mit einer spezifischen Übertragungssicherheit anhand des Blockdiagramms in Fig. 3 im Detail erläutert.

Im ersten Verfahrensschritt S10 wird ein mit einer ersten Verschlüsselung verschlüsseltes Datenpaket von einem als Quell-Knoten dienenden Netzwerkknoten in einem ersten Netzwerk, das keine Übertragungssicherheit aufweist - beispielsweise das Internet - und in dem somit im Hinblick auf eine Manipulation des Datenpaketes durch Unberechtigte Datenpakete mit vertraulichen Daten verschlüsselt übertragen werden müssen, zu einer zum ersten Netzwerk gehörigen Netzwerk-Schnittstelle übertragen.

Bei dem ersten Netzwerk kann es sich um ein einziges erstes Netzwerk ohne Übertragungssicherheit - ein so genanntes schwarzes Netzwerk - oder, wie in Fig. 3 dargestellt ist, um ein erstes Netzwerk von mehreren parallel verschalteten ersten Netzwerken 1₁ bis 1_{N} handeln, die jeweils alle keine Übertragungssicherheit aufweisen.

Jedes dieser parallel verschalteten ersten Netzwerke 1₁ bis 1_{N} steht im Hinblick auf eine Übertragung des verschlüsselten Netzwerkes zu einem als Ziel-Knoten dienenden Netzwerknoten in einem zweiten Netzwerk, das eine spezifische Übertragungssicherheit aufweist, mit einem kryptografischen Ver- und Entschlüsselungs-Gerät 2 zur Entschlüsselung des verschlüsselten Datenpakets in Verbindung.

Die Verbindung zwischen dem einzelnen ersten Netzwerk 1₁ bis 1_{N} und dem kryptografischen Ver- und Entschlüsselungs-Gerät 2 erfolgt über eine dem jeweiligen ersten Netzwerk 1₁ bis 1_{N} jeweils nachgeschaltete Netzwerk-Schnittstelle 2₂ bis 2_{N} und einen den einzelnen nachgeschalteten Netzwerk-Schnittstellen 2₂ bis 2_{N} nachgeschalteten Demultiplexer 3. Diese verbinden alternativ eine der Netzwerk-Schnittstellen 2₂ bis 2_{N} mit der am Ausgang des Demultiplexers 3 sich anschließenden Netzwerk-Verarbeitungs-Einheit 4.

Die Netzwerk-Verarbeitungs-Einheit 4 führt anhand der Ziel-Adresse des jeweils empfangenen Datenpakets eine Ermittlung eines in einer Zuordnungstabelle hinterlegten und zur Ziel-Adresse korrespondierenden Satzes von Parametern durch, die im wesentlichen für das korrekte Weiterschalten (engl. Routing) des Datenpakets zum jeweils korrekten zweiten Netzwerk und für die korrekte Entschlüsselung des mit einer ersten Verschlüsselung verschlüsselten Datenpakets mit den korrekten Entschlüsselungsparametern - beispielsweise Entschlüsselungsverfahren, Schlüssel zum Entschlüsseln - im kryptografischen Ver- und Entschlüsselungs-Gerät 2 erforderlich sind. Bei Verwendung der Standards IPsec oder SCIP zur Verschlüsselung von Datenpaketen im Internet handelt es sich bei den Zuordnungstabellen um die so genannten Security-Association-Database(SAD)-Tabellen.

Die einzelnen aus der Zuordnungstabelle ermittelten Parameter werden von der Netzwerk-Verarbeitungs-Einheit 4 dem verschlüsselten Datenpaket hinzugefügt. Das verschlüsselte Datenpaket wird daraufhin in dem nachfolgenden Demultiplexer 5 entsprechend des von der Zuordnungstabellen zugewiesenen Parameters zum Routing des Datenpakets einem der ersten Ver- und Entschlüsselungseinheiten 6₁, 6₂ bis 6_{N} zugeführt, in dem die Entschlüsselung des verschlüsselten Datenpakets entsprechend der ersten Verschlüsselung des verschlüsselten Datenpaketes erfolgt, die zur Übertragungssicherheit des als Ziel-Netzwerk des verschlüsselten Datenpakets dienenden zweiten Netzwerkes korrespondiert.

Im nächsten Verfahrensschritt S20 erfolgt die Entschlüsselung des verschlüsselten Datenpakets in der ersten Ver- und Entschlüsselungseinheit 6₁, 6₂ bis 6_{N}, in die das verschlüsselte Datenpaket vom Demultiplexer 5 geleitet wird. Das in der jeweiligen ersten Ver- und Entschlüsselungseinheit 6₁, 6₂ bis 6_{N} verwendete Verschlüsselungsverfahren zur Entschlüsselung des verschlüsselten Datenpaketes und die funktionale Ausprägung der ersten Verschlüsselung ist beliebig.

Im darauffolgenden Verfahrensschritt S30 wird in einer zugeordneten zweiten Ver- und Entschlüsselungseinheit 7₁, 7₂ bis 7_{N} eine zweite Verschlüsselung des nunmehr von der ersten Verschlüsselung entschlüsselten Datenpakets durchgeführt.

In einer ersten Variante ist die zweite Ver- und Entschlüsselungseinheit 7₁, 7₂ bis 7_{N}, wie in Fig. 3 durch die gestrichelte Linie angedeutet ist, mit der zugehörigen ersten Ver- und Entschlüsselungseinheit 6₁, 6₂ bis 6_{N} in einer einzigen Ver- und Entschlüsselungseinheit 8₁, 8₂ bis 8_{N} integriert. In einer zweiten Variante ist die zweite Ver- und Entschlüsselungseinheit 7₁, 7₂ bis 7_{N} der zugehörigen ersten Ver- und Entschlüsselungseinheit 6₁, 6₂ bis 6_{N} nachgeschaltet.

In der jeweiligen zweiten Ver- und Entschlüsselungseinheit 7₁, 7₂ bis 7_{N}, in der das zu verschlüsselnde Datenpaket übertragen wird, erfolgt eine zweite Verschlüsselung des Datenpakets mit einem Schlüssel, der zum logischen Übertragungskanal zwischen der ersten Ver- und Entschlüsselungseinheit 6₁, 6₂ bis 6_{N} und der Netzwerkschnittstelle 9₁, 9₂ bis 9_{N} des als Ziel-Netzwerk dienenden zweiten Netzwerks des zu übertragenden Datenpakets korrespondiert.

Die zweite Verschlüsselung des jeweils zu übertragenden Datenpakets erfolgt im Transportverschlüsselungsmodus. Hierbei werden sämtliche Kontroll- und Nutzdaten des Datenpakets mit Ausnahme der IP-Adresse des Ziel-Netzwerkknotens im als Zielnetzwerk jeweils dienenden zweiten Netzwerk mit der zweiten Verschlüsselung verschlüsselt. Auf diese Weise dient neben der zweiten Verschlüsselung auch die unverschlüsselte IP-Adresse des Ziel-Netzwerkknotens zur Erhöhung einer sicheren Übertragung im jeweils korrekten logischen Übertragungskanal.

Als Verschlüsselungsverfahren für die zweite Verschlüsselung kann im einfachsten Fall ein identisches Verschlüsselungsverfahren in allen zweiten Ver- und Entschlüsselungseinheiten 7₁, 7₂ bis 7_{N} verwendet werden. Zur Erhöhung der Sicherheit gegenüber Manipulationen an der zweiten Verschlüsselung wird in jeder einzelnen zweiten Ver- und Entschlüsselungseinheit 7₁, 7₂ bis 7_{N} jeweils ein unterschiedliches Verschlüsselungsverfahren angewendet.

Um die Sicherheit der Übertragung des Datenpakets im jeweils zugeordneten logischen Übertragungskanal gegenüber Manipulationen zusätzlich optional zu erhöhen, wird die Adresse der Netzwerk-Schnittstelle 9₁, 9₂ bis 9_{N}, an die das im jeweils zugeordneten logischen Übertragungskanal übertragene Datenpaket gesendet wird, in die zweite Verschlüsselung integriert.

Hierzu wird in einer ersten Untervariante der Integration der Adresse der Netzwerk-Schnittstelle in die zweite Verschlüsselung die Adresse der zugehörigen Netzwerk-Schnittstelle 9₁, 9₂ bis 9_{N} über eine Hash-Funktion in einen zugeordneten Hash-Wert transformiert und die Adresse der zugehörigen Netzwerk-Schnittstelle 9₁, 9₂ bis 9_{N} sowie des zugehörigen Hash-Wertes zusammen mit den Daten des zu transferierenden Datenpakets der zweiten Verschlüsselung zugeführt.

In einer zweiten Untervariante der Integration der Adresse der Netzwerk-Schnittstelle in die zweite Verschlüsselung wird die Adresse der zugehörigen Netzwerk-Schnittstelle 9₁, 9₂ bis 9_{N} mit dem ursprünglichen für die zweite Verschlüsselung in der jeweiligen zweiten Ver- und Entschlüsselungseinheit 7₁, 7₂ bis 7_{N} verwendeten Schlüssel verschlüsselt. Der daraus gewonnene modifizierte Schlüssel wird anstelle des ursprünglichen Schlüssels für die zweite Verschlüsselung in der jeweiligen zweiten Ver- und Entschlüsselungseinheit 7₁, 7₂ bis 7_{N} verwendet.

Eine weitere optionale Erweiterung für eine zusätzliche Erhöhung der Sicherheit im jeweiligen logischen Übertragungskanal stellt die individuelle zweite Verschlüsselung jedes einzelnen im jeweiligen logischen Übertragungskanal zu übertragenden Datenpakets dar. Hierzu wird für jedes zu übertragende Datenpaket jeweils ein Sequenzwert generiert. Dieser Sequenzwert ergibt sich beispielsweise aus dem Zählerstand eines in der jeweiligen zweiten Ver- und Entschlüsselungseinheit 7₁, 7₂ bis 7_{N} integrierten Zählers oder aus der Zeit eines in der jeweiligen zweiten Ver- und Entschlüsselungseinheit 7₁, 7₂ bis 7_{N} integrierten Zeitgebers.

In einer ersten Untervariante der individuellen zweiten Verschlüsselung wird der für jedes zu übertragende Datenpaket jeweils generierte Sequenzwert mit dem in der jeweiligen zweiten Ver- und Entschlüsselungseinheit 7₁, 7₂ bis 7_{N} verwendeten Schlüssel verschlüsselt. Mit dem somit gewonnenen modifizierten Schlüssel anstelle des ursprünglichen Schlüssels erfolgt die individuelle zweite Verschlüsselung des jeweils zu übertragenden Datenpakets.

In einer zweiten Untervariante der individuellen zweiten Verschlüsselung wird der für das jeweils zu übertragende Datenpaket generierte Sequenzwert eine Hash-Funktion zugeführt und der daraus gewonnene Hash-Wert des zum jeweiligen Datenpaket generierten Sequenzwert wird zusammen mit dem für das jeweilige Datenpaket generierten Sequenzwert und den restlichen Daten des Datenpakets in einer zweiten Verschlüsselung verschlüsselt.

Schließlich werden zur zusätzlichen Individualisierung der bei jedem einzelnen Datenpaket jeweils durchgeführten zweiten Verschlüsselung im Verschlüsselungsverfahren der zweiten Verschlüsselung jedes einzelnen Datenpaketes jeweils ein individueller Initialisierungswert bei der Ermittlung des ursprünglichen Schlüssels und/oder des modifizierten Schlüssels der zweiten Verschlüsselung jedes einzelnen Datenpaketes jeweils ein individueller Initialisierungswert, bei der Berechnung eines Hash-Wertes für jedes einzelne Datenpaket jeweils ein individueller Initialisierungswert und/oder bei der Integration der Adresse der zugehörigen Netzwerk-Schnittstelle in die zweite Verschlüsselung jedes einzelnen Datenpaketes jeweils ein individueller Initialisierungswert berücksichtigt. Dieser Initialisierungswert wird jeweils in einem in der zweiten Ver- und Entschlüsselungseinheit 7₁, 7₂ bis 7_{N} integrierten Zufallsgenerator erzeugt.

Im darauffolgenden Verfahrensschritt S40 wird das derart mit einer zweiten Verschlüsselung verschlüsselte Datenpaket in einem nachfolgenden Multiplexer 10 von der jeweiligen zweiten Ver- und Entschlüsselungseinheit 7₁, 7₂ bis 7_{N} auf den gemeinsamen physikalischen Übertragungskanal 11, der eine einzige gemeinsame Verbindung darstellt, geschaltet. Daraufhin erfolgt die Verschaltung des über den physikalischen Übertragungskanal 11 übertragenen Datenpakets in einem an den physikalischen Übertragungskanal 11 sich anschließenden Demultiplexer 12 entsprechend den dem Datenpaket in der Netzwerk-Verarbeitungs-Einheit 4 aus der Zuordnungstabelle zugewiesenen Routing-Parametern in eine jeweilige Netzwerk-Schnittstelle 9₁, 9₂ bis 9_{N} des als Ziel-Netzwerk dienenden zweiten Netzwerks.

Im nächsten Verfahrensschritt S50 wird das in die zugehörige Netzwerk-Schnittstelle 9₁, 9₂ bis 9_{N} transferierte Datenpaket in einer der zugehörigen Netzwerk-Schnittstelle 9₁, 9₂ bis 9_{N} zugeordneten zweiten Ver- und Entschlüsselungseinheit 13₁, 13₂ bis 13_{N} hinsichtlich seiner zweiten Verschlüsselung entschlüsselt. Hierbei kann in einer ersten Variante die zweite Ver- und Entschlüsselungseinheit 13₁, 13₂ bis 13_{N} der zugehörigen Netzwerk-Schnittstelle 9₁, 9₂ bis 9_{N} vorausgeschaltet sein oder in einer zweiten Variante, wie in Fig. 3 durch gestrichelte Linie angedeutet ist, mit der zweiten Ver- und Entschlüsselungseinheit 13₁, 13₂ bis 13_{N} in einer einzigen Ver- und Entschlüsselungseinheit 14₁, 14₂ bis 14_{N} integriert sein.

Bei der Entschlüsselung des mit einer zweiten Verschlüsselung verschlüsselten Datenpakets wird der der jeweiligen zweiten Ver- und Entschlüsselungseinheit 13₁, 13₂ bis 13_{N} bekannte und ein zum Schlüssel der zugehörigen zweiten Ver- und Entschlüsselungseinheit 7₁, 7₂ bis 7_{N} identischer Schlüssel verwendet. Hinsichtlich des Schlüsselaustauschs zwischen den jeweils sendeseitigen Ver- und Entschlüsselungseinheiten 7₁, 7₂ bis 7_{N} und den empfängerseitigen Ver- und Entschlüsselungseinheiten 13₁, 13₂ bis 13_{N} sei zum Beispiel auf die entsprechenden Schlüsselaustauschverfahren in den Standards IPSec bzw. SCIP verwiesen.

Das verwendete Verschlüsselungsverfahren und die verwendete Hash-Funktion entsprechen auch dem in der zweiten Ver- und Entschlüsselungseinheit 7₁, 7₂ bis 7_{N} verwendeten Verschlüsselungsverfahren und den verwendeten Hash-Funktionen. Auch hinsichtlich des Austausches der in den jeweiligen zweiten senderseitigen Ver- und Entschlüsselungseinheiten 7₁, 7₂ bis 7_{N} und empfängerseitigen Ver- und Entschlüsselungseinheiten 13₁, 13₂ bis 13_{N} jeweils verwendeten Verschlüsselungsverfahren und Hash-Funktionen sei auf die jeweiligen Sicherheits-Standards hingewiesen.

Die Generierung eines zum jeweiligen Datenpaket gehörigen Sequenzwertes für die Entschlüsselung des individuellen Datenpaketes erfolgt ebenfalls beispielsweise in einem Zähler oder Zeitgeber, der jeweils mit dem Zähler oder Zeitgeber der zweiten senderseitigen Ver- und Entschlüsselungseinheit 7₁, 7₂ bis 7_{N} synchronisiert ist.

Die Generierung eines Initialisierungswertes für die Entschlüsselung des individuellen mit der zweiten Verschlüsselung verschlüsselten Datenpakets erfolgt jeweils in einem Zufallsgenerator, der mit einem in der zweiten Ver- und Entschlüsselungseinheit 7₁, 7₂ bis 7_{N} integrierten Zufallsgenerator synchronisiert ist.

Falls die Entschlüsselung des mit einer zweiten Verschlüsselung verschlüsselten Datenpaketes zu einem korrekten Entschlüsselungsergebnis geführt hat, ist das Datenpaket einer korrekten Netzwerk-Schnittstelle 9₁, 9₂ bis 9_{N} zugeleitet worden, das der zweiten empfangsseitigen Ver- und Entschlüsselungseinheit 7₁, 7₂ bis 7_{N} zugeordnet ist, in dem das mit der zweiten Verschlüsselung verschlüsselte Datenpaket entschlüsselt wurde.

Im abschließenden Verfahrensschritt S60 wird das von der zweiten Verschlüsselung entschlüsselte Datenpaket von der jeweiligen Netzwerk-Schnittstelle 9₁, 9₂ bis 9_{N} zum Ziel-Netzwerk-Knoten im jeweils zugeordneten zweiten Netzwerk 15₁ 15₂ bis 15_{N} übertragen.

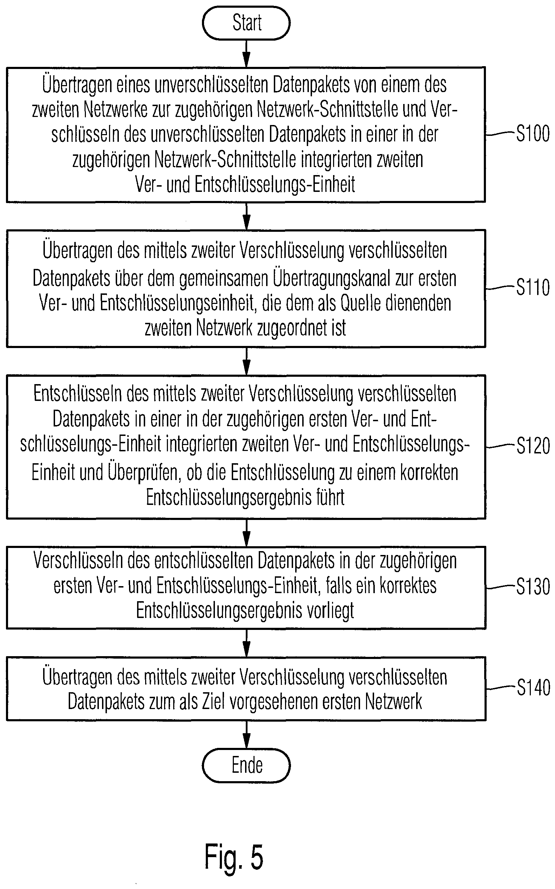

Im Folgenden wird das erfindungsgemäße Verfahren zum Übertragen eines Datenpakets von einem zweiten Netzwerk mit einer spezifischen Übertragungssicherheit zu einem ersten Netzwerk ohne Übertragungssicherheit anhand des Flussdiagrammes in Fig. 5 in Verbindung mit dem erfindungsgemäßen System zur Übertragung eines Datenpakets zwischen einem ersten Netzwerk ohne Übertragungssicherheit und einem zweiten Netzwerk mit einer spezifischen Übertragungssicherheit anhand des Blockdiagramms in Fig. 3 im Detail erläutert.

Im ersten Verfahrensschritt S100 des erfindungsgemäßen Verfahrens wird ein unverschlüsseltes Datenpaket von einem Quell-Netzwerk-Knoten eines als Quell-Netzwerk dienenden zweiten Netzwerkes 15₁, 15₂ bis 15_{N} aus mehreren zweiten Netzwerken mit jeweils einer spezifischen Übertragungssicherheit zur zugehörigen Netzwerk-Schnittstelle 9₁, 9₂ bis 9_{N} transportiert.

In einer der zugehörigen Netzwerk-Schnittstelle 9₁, 9₂ bis 9_{N} angegliederten zweiten Ver- und Entschlüsselungseinheit 13₁, 13₂ bis 13_{N} erfolgt eine zweite Verschlüsselung des unverschlüsselten Datenpakets.

Hinsichtlich der strukturellen Verknüpfung zwischen den einzelnen Netzwerk-Schnittstellen 9₁, 9₂ bis 9_{N} und den zugeordneten zweiten Ver- und Entschlüsselungseinheiten 13₁, 13₂ bis 13_{N} gelten die unter Verfahrensschritt S50 des erfindungsgemäßen Verfahrens gemäß Fig. 4 bereits vorgestellten Varianten.

Hinsichtlich der einzelnen Ausführungsformen, Ausprägungen, Varianten und Untervarianten der zweiten Verschlüsselung gelten die unter Verfahrensschritt S30 des erfindungsgemäßen Verfahrens gemäß Fig. 4 bereits erläuterten Möglichkeiten.

Das mit einer zweiten Verschlüsselung verschlüsselte Datenpaket wird im nächsten Verfahrensschritt S110 in einem Multiplexer 12, der dem in umgekehrter Richtung betriebenen Demultiplexer 12 des erfindungsgemäßen Verfahrens gemäß Fig. 4 entspricht, auf den gemeinsamen physikalischen Übertragungskanal 11 geschaltet und über diesen gemeinsamen physikalischen Übertragungskanal 11 einem Demultiplexer 10 zugeführt, der dem in umgekehrter Richtung betriebenen Multiplexer 12 des erfindungsgemäßen Verfahrens gemäß Fig. 4 entspricht.

Dem gemeinsamen physikalischen Übertragungskanal 11 ist eine Netzwerk-Verarbeitungs-Einheit 16 zugeordnet. Die Netzwerk-Verarbeitungs-Einheit 16 ermittelt in Abhängigkeit der IP-Zieladresse des mit einer zweiten Verschlüsselung verschlüsselten Datenpakets in einer integrierten Zuordnungstabelle den zur IP-Zieladresse des Datenpakets gehörigen Parametersatz zum korrekten Routing und zur korrekten ersten Verschlüsselung des mit einer zweiten Verschlüsselung bereits verschlüsselten Datenpakets und fügt diesen Parametersatz dem Datenpaket als zusätzliche Parameterdaten zu.

Anhand der Routing-Parameter, die dem mit einer zweiten Verschlüsselung verschlüsselten Datenpaket hinzugefügt werden, erfolgt eine Verschaltung des Datenpakets innerhalb des Demultiplexers 10 zur jeweils korrekten ersten Ver- und Entschlüsselungseinheit 6₁, 6₂ bis 6_{N}, die der spezifischen Übertragungssicherheit des zweiten Netzwerkes 15₁, 15₂ bis 15_{N} entspricht, in dem der Quell-Netzwerk-Knoten des Datenpakets liegt.

Im darauffolgenden Verfahrensschritt S120 erfolgt eine Entschlüsselung des mit der zweiten Verschlüsselung verschlüsselten Datenpakets in der zugehörigen Ver- und Entschlüsselungseinheit 6₁, 6₂ bis 6_{N}. Für die einzelnen Ausführungsformen, Ausprägungen, Varianten und Untervarianten der Entschlüsselung des mit der zweiten Verschlüsselung verschlüsselten Datenpakets sind die in Verfahrensschritt S50 des erfindungsgemäßen Verfahrens gemäß Fig. 4 aufgeführten Möglichkeiten entsprechend anzuwenden.

Im nächsten Verfahrensschritt S130 wird das von der zweiten Verschlüsselung entschlüsselte Datenpaket für die Übertragung in einem der ersten Netzwerke 1₁ bis 1_{N}, die jeweils keine Übertragungssicherheit aufweisen, in einer der jeweiligen zweiten Ver- und Entschlüsselungseinheit 8₁, 8₂ bis 8_{N} zugeordneten ersten Ver- und Entschlüsselungseinheit 6₁, 6₂ bis 6_{N} mit einer ersten Verschlüsselung verschlüsselt, falls die Entschlüsselung des Datenpakets im vorherigen Verfahrensschritt S120 zu einem korrekten Entschlüsselungsergebnis geführt hat und somit das entschlüsselte Datenpaket der korrekten ersten Ver- und Entschlüsselungseinheit 6₁, 6₂ bis 6_{N} zugeführt wurde.

Im abschließenden Verfahrensschritt S140 wird das mit der zweiten Verschlüsselung verschlüsselte Datenpaket über den Multiplexer 5, der dem in umgekehrter Richtung betriebenen Demultiplexer 5 des erfindungsgemäßen Verfahrens gemäß Fig. 4 entspricht, zu einem Demultiplexer 3 übertragen, der dem in umgekehrter Richtung betriebenen Multiplexer 5 des erfindungsgemäßen Verfahrens gemäß Fig. 4 entspricht. In diesem Demultiplexer 3 wird entsprechend dem Routing-Parameter, der dem Datenpaket in der Netzwerk-Verarbeitungs-Einheit 16 zugefügt wird, das der ersten Verschlüsselung verschlüsselte Datenpaket der jeweils zugeordneten Netzwerk-Schnittstelle 2₁ bis 2_{N} zugeschaltet. Schließlich wird das mit der ersten Verschlüsselung verschlüsselte Datenpaket zu dem Ziel-Netzwerk-Knoten innerhalb des der jeweils ausgewählten Netzwerk-Schnittstelle 2₁ bis 2_{N} zugeordneten ersten Netzwerks 1₁ bis 1_{N} transportiert.

Die Erfindung ist nicht auf die in der Beschreibung offenbarten Ausführungsformen, Ausprägungen, Varianten und Untervarianten beschränkt. Die Erfindung wird von den Ansprüchen definiert.

## Patentansprüche

1. Verfahren zum Übertragen eines verschlüsselten Datenpakets von mindestens einem ersten Netzwerk (1₁,..,1_{N}) ohne Übertragungssicherheit zu mindestens einem zweiten Netzwerk (15₁,15₂,..,15_{N}) mit einer spezifischen Übertragungssicherheit mit folgenden Verfahrensschritten:
• Übertragen des verschlüsselten Datenpakets von einer Netzwerk-Schnittstelle (2₁,..,2_{N}) des ersten Netzwerkes (1₁,..,1_{N}) zu einer zum zweiten Netzwerk (15₁,15₂,..,15_{N}) gehörigen ersten Ver- und Entschlüsselungseinheit (6₁,6₂,..,6_{N}),
• Entschlüsseln des verschlüsselten Datenpakets in der ersten Ver- und Entschlüsselungseinheit (6₁,6₂,..,6_{N}) von einer ersten Verschlüsselung, die der spezifischen Übertragungssicherheit des zweiten Netzwerkes (15₁,15₂,..,15_{N}) entspricht,
• Übertragen des entschlüsselten Datenpakets von der ersten Ver- und Entschlüsselungseinheit (6₁,6₂,..,6_{N}) zu einer zum zweiten Netzwerk (15₁,15₂,..,15_{N}) gehörigen Netzwerk-Schnittstelle (9₁,9₂,..,9_{N}),
wobei zur manipulationssicheren und korrekten Übertragung des Datenpakets auf einem logischen Übertragungskanal zwischen der korrekten ersten Ver- und Entschlüsselungseinheit (6₁,6₂,..,6_{N}) und der korrekten Netzwerk-Schnittstelle (9₁,9₂,..,9_{N}) des zweiten Netzwerks (15₁,15₂,..,15_{N}) eine zum logischen Übertragungskanal gehörige zweite Verschlüsselung des Datenpakets erfolgt,
**dadurch gekennzeichnet,**
**dass** zur Erkennung einer Manipulation der zweiten Verschlüsselung des im logischen Übertragungskanal übertragenen Datenpakets eine Hash-Funktion in die zweite Verschlüsselung integriert ist,
**dass** die Daten des auf dem logischen Übertragungskanal zu übertragenden Datenpakets der Hash-Funktion zugeführt werden und das Ergebnis der Hash-Funktion zusammen mit den Daten des im logischen Übertragungskanal übertragenen Datenpakets der zweiten Verschlüsselung zugeführt wird, dass zu einer Individualisierung der zweiten Verschlüsselung jedes einzelnen Datenpaketes ein zum jeweiligen Datenpaket gehöriger Sequenzwert in die zweite Verschlüsselung des jeweiligen Datenpakets eingeht, und dass durch eine Verwendung eines Initialisierungsdatums beim Verschlüsselungsverfahren der zweiten Verschlüsselung eine zusätzliche Individualisierung der zweiten Verschlüsselung jedes einzelnen übertragenen Datenpakets erreicht wird.

2. Verfahren zum Übertragen eines Datenpakets von mindestens einem zweiten Netzwerk (15₁, 15₂, .., 15_{N}) mit einer spezifischen Übertragungssicherheit zu mindestens einem ersten Netzwerk (1₁,..,1_{N}) ohne Übertragungssicherheit mit folgenden Verfahrensschritten:
• Übertragen eines Datenpakets von einer zum zweiten Netzwerk (15₁,15₂,..,15_{N}) gehörigen Netzwerk-Schnittstelle (9₁,9₂,..,9_{N}) zu einer zum zweiten Netzwerk (15₁,15₂,..,15_{N}) gehörigen ersten Ver- und Entschlüsselungseinheit (6₁,6₂,..,6_{N}),
• Verschlüsseln des Datenpakets in der ersten Ver- und Entschlüsselungseinheit (6₁,6₂,..,6_{N}) mit einer ersten Verschlüsselung entsprechend der spezifischen Übertragungssicherheit des zweiten Netzwerkes (15₁,15₂,..,15_{N}),
• Übertragen des Datenpakets von der zum zweiten Netzwerk (15₁,15₂,..,15_{N}) gehörigen ersten Ver- und Entschlüsselungseinheit (6₁,6₂,..,6_{N}) zu einer Netzwerk-Schnittstelle (2₁,..,2_{N}) des ersten Netzwerkes (1₁,..,1_{N}), wobei zur manipulationssicheren und korrekten Übertragung des Datenpakets auf einem logischen Übertragungskanal zwischen der korrekten Netzwerk-Schnittstelle (9₁,9₂,..,9_{N}) und der korrekten ersten Ver- und Entschlüsselungseinheit (6₁,6₂,..,6_{N}) des zweiten Netzwerks (15₁,15₂, ..,15_{N}) eine zum logischen Übertragungskanal gehörige zweite Verschlüsselung des Datenpakets erfolgt,
**dadurch gekennzeichnet,**
**dass** zur Erkennung einer Manipulation der zweiten Verschlüsselung des im logischen Übertragungskanal übertragenen Datenpakets eine Hash-Funktion in die zweite Verschlüsselung integriert ist,
**dass** die Daten des auf dem logischen Übertragungskanal zu übertragenden Datenpakets der Hash-Funktion zugeführt werden und das Ergebnis der Hash-Funktion zusammen mit den Daten des im logischen Übertragungskanal übertragenen Datenpakets der zweiten Verschlüsselung zugeführt wird, dass zu einer Individualisierung der zweiten Verschlüsselung jedes einzelnen Datenpaketes ein zum jeweiligen Datenpaket gehöriger Sequenzwert in die zweite Verschlüsselung des jeweiligen Datenpakets eingeht, und dass durch eine Verwendung eines Initialisierungsdatums beim Verschlüsselungsverfahren der zweiten Verschlüsselung eine zusätzliche Individualisierung der zweiten Verschlüsselung jedes einzelnen übertragenen Datenpakets erreicht wird.

3. Verfahren nach Patentanspruch 1 oder 2,
**dadurch gekennzeichnet,**
**dass** zur zweiten Verschlüsselung des Datenpakets im logischen Übertragungskanal des jeweiligen zweiten Netzwerks (15₁,15₂,..,15_{N}) ein zum logischen Übertragungskanal des jeweiligen zweiten Netzwerks (15₁,15₂,..,15_{N}) gehöriger Schlüssel verwendet wird, der der Netzwerk-Schnittstelle (9₁,9₂,..,9_{N}) und der ersten Ver- und Entschlüsselungseinheit (6₁,6₂,..,6_{N}) des zweiten Netzwerks (15₁,15₂,..,15_{N}) bekannt ist.

4. Verfahren nach einem der Patentansprüche 1 bis 3,
**dadurch gekennzeichnet,**
**dass** die zweite Verschlüsselung des Datenpakets im logischen Übertragungskanal jedes zweiten Netzwerks (15₁,15₂,..,15_{N}) mit demselben Verschlüsselungsverfahren erfolgt.

5. Verfahren nach einem der Patentansprüche 1 bis 3,
**dadurch gekennzeichnet,**
**dass** die zweite Verschlüsselung des Datenpakets im logischen Übertragungskanal für jedes zweite Netzwerk (15₁,15₂,..,15_{N}) jeweils ein unterschiedliches Verschlüsselungsverfahren verwendet.

6. Verfahren nach einem der Patentansprüche 1 bis 5,
**dadurch gekennzeichnet,**
**dass** die zweite Verschlüsselung des Datenpakets im logischen Übertragungskanal jedes zweiten Netzwerks (15₁,15₂,..,15_{N}) in einem Transportverschlüsselungsmodus erfolgt.

7. Verfahren nach einem der Patentansprüche 1 bis 6,
**dadurch gekennzeichnet,**
**dass** in die zweite Verschlüsselung zusätzlich die Adresse der zum jeweiligen zweiten Netzwerk (15₁,15₂,..,15_{N}) gehörigen Netzwerk-Schnittstelle (9₁,9₂,..,9_{N}) integriert wird.

8. Verfahren nach Patentanspruch 7,
**dadurch gekennzeichnet,**
**dass** zu den Daten des auf dem logischen Übertragungskanal zu übertragenden Datenpakets die Adresse der zum jeweiligen zweiten Netzwerk (15₁,15₂,..,15_{N}) gehörigen Netzwerk-Schnittstelle (9₁,9₂,..,9_{N}) der Hash-Funktion zugeführt wird und das Ergebnis der Hash-Funktion zusammen mit den Daten des im logischen Übertragungskanal übertragenen Datenpakets der zweiten Verschlüsselung und der Adresse der zum jeweiligen zweiten Netzwerk gehörigen Netzwerk-Schnittstelle (9₁,9₂,..,9_{N}) zugeführt wird.

9. Verfahren nach Patentanspruch 7,
**dadurch gekennzeichnet,**
**dass** zur zweiten Verschlüsselung ein modifizierter Schlüssel verwendet wird, der sich aus einer zweiten Verschlüsselung der Adresse der zum jeweiligen zweiten Netzwerk (15₁, 15₂, .., 15_{N}) gehörigen Adresse mit dem zum jeweiligen zweiten Netzwerk (15₁, 15₂, .., 15_{N}) gehörigen Schlüssel ergibt.

10. Verfahren nach Patentanspruch 1 oder 2,
**dadurch gekennzeichnet,**
**dass** der Sequenzwert ein individueller Zählerwert oder ein individueller Zeitwert ist.

11. Verfahren nach Patentanspruch 1, 2 oder 10,
**dadurch gekennzeichnet,**
**dass** zur Individualisierung der zweiten Verschlüsselung jedes einzelnen Datenpaketes ein modifizierter Schlüssel verwendet wird, der sich aus der Verschlüsselung des zum jeweiligen Datenpaket gehörigen Sequenzwerts mit dem Schlüssel ergibt, der zum jeweiligen zweiten Netzwerk (15₁,15₂,..,15_{N}) gehört.

12. Verfahren nach Patentanspruch 1, 2 oder 10,
**dadurch gekennzeichnet,**
**dass** zur Individualisierung der zweiten Verschlüsselung jedes einzelnen Datenpaketes der zum jeweiligen Datenpaket gehörige Sequenzwert und ein Hash-Wert des Sequenzwertes mit den Daten des Datenpakets verschlüsselt werden.

13. System zum Übertragen eines Datenpakets zwischen mindestens einem ersten Netzwerk (1₁,..,1_{N}) ohne Übertragungssicherheit und von mehreren zweiten Netzwerken (15₁,15₂,..,15_{N}) mit jeweils einer spezifischen Übertragungssicherheit mit einer zu dem mindestens einen ersten Netzwerk (1₁,..,1_{N}) jeweils gehörigen Netzwerk-Schnittstelle (2₁,..,2_{N}), mehreren zu jeweils einem der zweiten Netzwerke (15₁,15₂,..,15_{N}) gehörigen erste Ver- und Entschlüsselungseinheiten (6₁,6₂,..,6_{N}), die jeweils alternativ mit der Netzwerk-Schnittstelle (2₁,..,2_{N}) des ersten Netzwerks (1₁,..,1_{N}) verschaltbar sind, mehreren zu jeweils einem der zweiten Netzwerke (15₁,15₂,..,15_{N}) gehörigen Netzwerk-Schnittstellen (9₁,9₂,..,9_{N}) und einem physikalischen Übertragungskanal (11), der alternativ mit einer ersten Ver- und Entschlüsselungseinheit (6₁,6₂,..,6_{N}) und einer Netzwerk-Schnittstelle (9₁,9₂,..,9_{N}) von jeweils einem der zweiten Netzwerke (15₁,15₂,..,15_{N}) verschaltbar ist,
wobei zu jeder zu jeweils einem zweiten Netzwerk (15₁,15₂,..,15_{N}) gehörigen Netzwerk-Schnittstelle (9₁,9₂,..,9_{N}) und in jeder zu jeweils einem zweiten Netzwerk (15₁,15₂,..,15_{N}) gehörigen ersten Ver- und Entschlüsselungseinheit (6₁,6₂,..,6_{N}) jeweils eine zweite Ver- und Entschlüsselungseinheit (7₁,7₂,..,7_{N}) zur zweiten Verschlüsselung des Datenpakets zur manipulationssicheren und korrekten Übertragung des Datenpakets auf einem logischen Übertragungskanal zwischen der korrekten Netzwerk-Schnittstelle (9₁,9₂,..,9_{N}) und der korrekten ersten Ver- und Entschlüsselungseinheit (6₁,6₂,..,6_{N}) des zweiten Netzwerks (15₁,15₂,..,15_{N}) vorgesehen ist,
**dadurch gekennzeichnet,**
**dass** in die jeweils zweite Ver- und Entschlüsselungseinheit (7₁,7₂,..,7_{N}), eine Hash-Funktion zur Erkennung einer Manipulation der zweiten Verschlüsselung des im logischen Übertragungskanal übertragenen Datenpakets integriert ist,
**dass** die in der zweiten Ver- und Entschlüsselungseinheit (7₁,7₂,..,7_{N}) integrierte Hash-Funktion aus Daten des auf dem logischen Übertragungskanal zu übertragenden Datenpakets ein Ergebnis berechnet, das zusammen mit den Daten des im logischen Übertragungskanal zu übertragenen Datenpakets der zweiten Verschlüsselung zugeführt ist, dass zu einer Individualisierung der zweiten Verschlüsselung jedes einzelnen im jeweiligen logischen Übertragungskanal zu übertragenden Datenpakets in der zweiten Ver- und Entschlüsselungseinheit (7₁,7₂,..,7_{N}) ein zum jeweiligen Datenpaket gehöriger Sequenzwert generiert ist, der mit einem in der jeweiligen zweiten Ver- und Entschlüsselungseinheit (7₁,7₂,..,7_{N}) verwendeten Schlüssel verschlüsselt ist und mit dem somit gewonnenen modifizierten Schlüssel die individuelle zweite Verschlüsselung des jeweils zu übertragenden Datenpakets verschlüsselt ist, und
**dass** zur zusätzlichen Individualisierung in der zweiten Ver- und Entschlüsselungseinheit (7₁,7₂,..,7_{N}) ein individuelles Initialisierungsdatum erzeugt ist, welches bei der Ermittlung des ursprünglichen Schlüssels und/oder des modifizierten Schlüssels im Verschlüsselungsverfahren der zweiten Verschlüsselung jedes einzelnen Datenpaketes berücksichtigt ist.

14. System nach Patentanspruch 13,
**dadurch gekennzeichnet,**
**dass** die zweite Ver- und Entschlüsselungseinheit (7₁,7₂,..,7_{N}) in der zugehörigen ersten Ver- und Entschlüsselungseinheit (6₁,6₂,..,6_{N}) und in der zugehörigen Netzwerk-Schnittstelle (9₁,9₂,..,9_{N}) des jeweiligen zweiten Netzwerkes (15₁,15₂,..,15_{N}) integriert ist.

15. System nach Patentanspruch 13,
**dadurch gekennzeichnet,**
**dass** die zweiten Ver- und Entschlüsselungseinheiten (7₁,7₂,..,7_{N}) den jeweils zugeordneten ersten Ver- und Entschlüsselungseinheiten (6₁,6₂,..,6_{N}) in Richtung des physikalischen Übertragungskanals (11) nachgeschaltet sind.

16. System nach einem der Patentansprüche 13 bis 15,
**dadurch gekennzeichnet,**
**dass** zur alternativen Verschaltung der zu dem mindestens einen ersten Netzwerk (1₁,..,1_{N}) jeweils gehörigen Netzwerk-Schnittstelle (2₁,..,2_{N}) mit einer der ersten Ver- und Entschlüsselungseinheiten (6₁,6₂,..,6_{N}), zur alternativen Verschaltung einer der zu jeweils einem zweiten Netzwerk (15₁,15₂,..,15_{N}) gehörigen ersten oder zweiten Ver- und Entschlüsselungseinheit (6₁,6₂,..,6_{N},7₁,7₂,..,7_{N}) mit dem physikalischen Übertragungskanal (11) und zur alternativen Verschaltung des physikalischen Übertragungskanals (11) mit einer der zu jeweils einem zweiten Netzwerk (15₁,15₂,..,15_{N}) gehörigen Netzwerk-Schnittstelle (9₁,9₂,..,9_{N}) jeweils ein Multiplexer oder Demultiplexer (3,5,10,12) vorgesehen ist.

17. System nach einem der Patentansprüche 13 bis 16,
**dadurch gekennzeichnet,**
**dass** alle ersten Ver- und Entschlüsselungseinheiten (6₁,6₂,..,6_{N}) in einem einzigen Gerät (100) integriert sind.

18. System nach Patentanspruch 16,
**dadurch gekennzeichnet,**
**dass** die zur alternativen Verschaltung der zu dem mindestens einen ersten Netzwerk (1₁,,.,1_{N}) jeweils gehörigen Netzwerk-Schnittstelle (2₁,..,2_{N}) mit einer der ersten Ver- und Entschlüsselungseinheiten (6₁,6₂,..,6_{N}) und die zur alternativen Verschaltung einer der zu jeweils einem zweiten Netzwerk (15₁,15₂,..,15_{N}) gehörigen ersten Ver- und Entschlüsselungseinheiten (6₁,6₂,..,6_{N}) mit dem physikalischen Übertragungskanal (11) vorgesehenen Multiplexer oder Demultiplexer (5,10) in dem einzigen Gerät (100) integriert sind.

19. System nach Patentanspruch 18,
**dadurch gekennzeichnet,**
**dass** in dem einzigen Gerät (100) zusätzlich die zur alternativen Verschaltung des physikalischen Übertragungskanal (11) mit einer der zu jeweils einem zweiten Netzwerk (15₁,15₂,..,15_{N}) gehörigen Netzwerk-Schnittstellen (9₁,9₂,..,9_{N}) vorgesehene Multiplexer oder Demultiplexer und die zu jedem zweiten Netzwerk jeweils gehörigen Netzwerk-Schnittstellen (9₁,9₂,..,9_{N}) integriert sind.

20. Computerprogramm mit Programmcode-Mitteln, um alle Schritte gemäß einem der Ansprüche 1 bis 12 durchführen zu können, wenn das Programm auf einem Computer, einem digitalen Signalprozessor oder auf anderen programmierbaren Komponenten ausgeführt wird.

21. Computerprogramm-Produkt mit insbesondere auf einem maschinenlesbaren Träger gespeicherten Programmcode-Mitteln, um alle Schritte gemäß einem der Ansprüche 1 bis 12 durchführen zu können, wenn das Programm auf einem Computer, einem digitalen Signalprozessor oder anderen programmierbaren Komponenten ausgeführt wird.

## Claims

1. Method for transmitting an encrypted data packet from at least one first network (1₁, ...,1_{N}) without transmission reliability to at least one second network (15₁, 15₂, ..., 15_{N}) having a specific transmission reliability, having the following method steps:
• transmitting the encrypted data packet from a network interface (2₁, ..., 2_{N}) of the first network (1₁, .., 1_{N}) to a first encryption and decryption unit (6₁, 6₂, ..., 6_{N}) associated with the second network (15₁, 15₂, ..., 15_{N})
• decrypting the encrypted data packet in the first encryption and decryption unit (6₁, 6₂, ..., 6_{N}) from a first encryption corresponding to the specific transmission reliability of the second network (15₁, 15₂, ..., 15_{N}),
• transmitting the decrypted data packet from the first encryption and decryption unit (6₁, 6₂, ..., 6_{N}) to a network interface (9₁, 9₂, ..., 9_{N}) associated with the second network (15₁, 15₂, ..., 15_{N}),
wherein manipulation-proof and correct transmission of the data packet on a logical transmission channel between the correct first encryption and decryption unit (6₁, 6₂, ..., 6_{N}) and the correct network interface (9₁, 9₂, ..., 9_{N}) of the second network (15₁, 15₂, ..., 15_{N}) is achieved by virtue of a second encryption, associated with the logical transmission channel, of the data packet being effected,
**characterized**
**in that** detection of a manipulation of the second encryption of the data packet transmitted in the logical transmission channel is achieved by virtue of a hash function being incorporated in the second encryption,
**in that** the data of the data packet to be transmitted on the logical transmission channel are supplied to the hash function and the result of the hash function together with the data of the data packet transmitted in the logical transmission channel is supplied to the second encryption,
**in that** individualization of the second encryption of each individual data packet is achieved by virtue of a sequence value associated with the respective data packet being used in the second encryption of the respective data packet, and
**in that** use of an initialization datum in the encryption method of the second encryption achieves additional individualization of the second encryption of each individual transmitted data packet.

2. Method for transmitting a data packet from at least one second network (15₁, 15₂, ..., 15_{N}) having a specific transmission reliability to at least one first network (1₁, ..., 1_{N}) without transmission reliability, having the following method steps:
• transmitting a data packet from a network interface (9₁, 9₂, ..., 9_{N}) associated with the second network (15₁, 15₂, ..., 15_{N}) to a first encryption and decryption unit (6₁, 6₂, ..., 6_{N}) associated with the second network (15₁, 15₂, ..., 15_{N}),
• encrypting the data packet in the first encryption and decryption unit (6₁, 6₂, ..., 6_{N}) with a first encryption corresponding to the specific transmission reliability of the second network (15₁, 15₂, ..., 15_{N}),
• transmitting the data packet from the first encryption and decryption unit (6₁, 6₂, ..., 6_{N}) associated with the second network (15₁, 15₂, ..., 15_{N}) to a network interface (2₁,..., 2_{N}) of the first network (1₁, ..., 1_{N}), wherein manipulation-proof and correct transmission of the data packet on a logical transmission channel between the correct network interface (9₁, 9₂, ..., 9_{N}) and the correct first encryption and decryption unit (6₁, 6₂, ..., 6_{N}) of the second network (15₁, 15₂, ..., 15_{N}) is achieved by virtue of a second encryption, associated with the logical transmission channel, of the data packet being effected,
**characterized**
**in that** detection of a manipulation of the second encryption of the data packet transmitted in the logical transmission channel is achieved by virtue of a hash function being incorporated in the second encryption,
**in that** the data of the data packet to be transmitted on the logical transmission channel are supplied to the hash function and the result of the hash function together with the data of the data packet transmitted in the logical transmission channel is supplied to the second encryption,
**in that** individualization of the second encryption of each individual data packet is achieved by virtue of a sequence value associated with the respective data packet being used in the second encryption of the respective data packet, and
**in that** use of an initialization datum in the encryption method of the second encryption achieves additional individualization of the second encryption of each individual transmitted data packet.

3. Method according to claim 1 or 2,
**characterized**
**in that** the second encryption of the data in and the logical transmission channel of the respective second network (15₁, 15₂, ..., 15_{N}) is achieved by virtue of a key associated with the logical transmission channel of the respective second network (15₁, 15₂, ..., 15_{N}) being used that is known to the network interface (9₁, 9₂, ..., 9_{N}) and to first encryption and decryption unit (6₁, 6₂, ..., 6_{N}) of the second network (15₁, 15₂, ..., 15_{N}).

4. Method according to any of claims 1 to 3,
**characterized**
**in that** the second encryption of the data packet in the logical transmission channel of each second network (15₁, 15₂, ..., 15_{N}) is effected using the same encryption method.

5. Method according to any of claims 1 to 3,
**characterized**
**in that** the second encryption of the data packet in the logical transmission channel for each second network (15₁, 15₂, ..., 15_{N}) uses a different encryption method in each case.

6. Method according to any of claims 1 to 5,
**characterized**
**in that** the second encryption of the data packet in the logical transmission channel of each second network (15₁, 15₂, ..., 15_{N}) is effected in a transport encryption mode.

7. Method according to any of claims 1 to 6,
**characterized**
**in that** the second encryption additionally has the address of the network interface (9₁, 9₂, ..., 9_{N}) associated with the respective second network (15₁, 15₂, ..., 15_{N}) incorporated into it.

8. Method according to claim 7,
**characterized**
**in that** the data of the data packet to be transmitted on the logical transmission channel have the address of the network interface (9₁, 9₂, ..., 9_{N}) associated with the respective second network (15₁, 15₂, ..., 15_{N}) supplied to the hash function for them and the result of the hash function together with the data of the data packet transmitted in the logical transmission channel is supplied to the second encryption and to the address of the network interface (9₁, 9₂, ..., 9_{N}) associated with the respective second network.

9. Method according to claim 7,
**characterized**
**in that** the second encryption is achieved by virtue of a modified key being used that results from a second encryption of the address of the address associated with the respective second network (15₁, 15₂, ..., 15_{N}) using the key associated with the respective second network (15₁, 15₂, ..., 15_{N}).

10. Method according to claim 1 or 2,
**characterized**
**in that** the sequence value is an individual counter value or an individual time value.

11. Method according to claim 1, 2 or 10,
**characterized**
**in that** individualization of the second encryption of each individual data packet is achieved by virtue of a modified key being used that results from the encryption of the sequence value associated with the respective data packet using the key associated with the respective second network (15₁, 15₂, ..., 15_{N}) .

12. Method according to claim 1, 2 or 10,
**characterized**
**in that** individualization of the second encryption of each individual data packet is achieved by virtue of the sequence value associated with the respective data packet and a hash value of the sequence value being encrypted with the data of the data packet.

13. System for transmitting a data packet between at least one first network (1₁, ..., 1_{N}) without transmission reliability and from multiple second networks (15₁, 15₂, ..., 15_{N}) each having a specific transmission reliability, having a network interface (2₁, ..., 2_{N}) associated with the at least one first network (1₁, ..., 1_{N}) in each case, multiple first encryption and decryption units (6₁, 6₂, ..., 6_{N}), associated with one of the second networks (15₁, 15₂, ..., 15_{N}) in each case, that are each alternatively connectable to the network interface (2₁, ..., 2_{N}) of the first network (1₁, ..., 1_{N}), multiple network interfaces (9₁, 9₂, ..., 9_{N}) associated with one of the second networks (15₁, 15₂, ..., 15_{N}) in each case, and a physical transmission channel (11) that is alternatively connectable to a first encryption and decryption unit (6₁, 6₂, ..., 6_{N}) and to a network interface (9₁, 9₂, ..., 9_{N}) of one of the second networks (15₁, 15₂, ..., 15_{N}) in each case,
wherein for each network interface (9₁, 9₂, ..., 9_{N}) associated with a second network (15₁, 15₂, ..., 15_{N}) in each case, and in each first encryption and decryption unit (6₁, 6₂, ..., 6_{N}) associated with a second network (15₁, 15₂, ..., 15_{N}) in each case, there is provision for in each case a second encryption and decryption unit (7₁, 7₂, ..., 7_{N}) for the second encryption of the data packet for manipulation-proof and correct transmission of the data packet on a logical transmission channel between the correct network interface (9₁, 9₂, ..., 9_{N}) and the correct first encryption and decryption unit (6₁, 6₂, ..., 6_{N}) of the second network (15₁, 15₂, ..., 15_{N}),
**characterized**
**in that** the second encryption and decryption unit (7₁, 7₂, ..., 7_{N}) in each case incorporates a hash function for detecting a manipulation of the second encryption of the data packet transmitted in the logical transmission channel,
**in that** the hash function incorporated in the second encryption and decryption unit (7₁, 7₂, ..., 7_{N}) uses data of the data packet to be transmitted on the logical transmission channel to calculate a result that is supplied together with the data of the data packet to be transmitted in the logical transmission channel to the second encryption,
**in that** individualization of the second encryption of each individual data packet to be transmitted in the respective logical transmission channel in the second encryption and decryption unit (7₁, 7₂, ..., 7_{N}) is achieved by virtue of a sequence value associated with the respective data packet being generated that is encrypted using a key used in the respective second encryption and decryption unit (7₁, 7₂, ..., 7_{N}) and the modified key thus obtained is used to encrypt the individual second encryption of the data packet to be transmitted in each case,
and
**in that** additional individualization in the second encryption and decryption unit (7₁, 7₂, ..., 7_{N}) is achieved by virtue of an individual initialization datum being produced that is taken into consideration when ascertaining the original key and/or the modified key in the encryption method of the second encryption of each individual data packet.

14. System according to claim 13,
**characterized**
**in that** the second encryption and decryption unit (7₁, 7₂, ..., 7_{N}) is incorporated in the associated first encryption and decryption unit (6₁, 6₂, ..., 6_{N}) and in the associated network interface (9₁, 9₂, ..., 9_{N}) of the respective second network (15₁, 15₂, ..., 15_{N}).

15. System according to claim 13,
**characterized**
**in that** the second encryption and decryption units (7₁, 7₂, ..., 7_{N}) are connected downstream of the first encryption and decryption units (6₁, 6₂, ..., 6_{N}) that are assigned in each case in the direction of the physical transmission channel (11).

16. System according to any of claims 13 to 15,
**characterized**
**in that** for the purpose of alternative interconnection of the network interface (2₁, ..., 2_{N}) associated with the at least one first network (1₁, ..., 1_{N}) in each case and one of the first encryption and decryption units (6₁, 6₂, ..., 6_{N}), for the purpose of alternative interconnection of one of the first or second encryption and decryption unit (6₁, 6₂, ..., 6_{N}, 7₁, 7₂, ..., 7_{N}) associated with a second network (15₁, 15₂, ..., 15_{N}) in each case and the physical transmission channel (11) and for the purpose of alternative interconnection of the physical transmission channel (11) and one of the network interface (9₁, 9₂, ..., 9_{N}) associated with a second network (15₁, 15₂, ..., 15_{N}) in each case there is provision for in each case a multiplexer or demultiplexer (3, 5, 10, 12).

17. System according to any of claims 13 to 16,
**characterized**
**in that** all first encryption and decryption units (6₁, 6₂, ..., 6_{N}) are incorporated in a single device (100) .

18. System according to claim 16,
**characterized**
**in that** the multiplexers or demultiplexers (5, 10) provided for the purpose of alternative interconnection of the network interface (2₁, ..., 2_{N}) associated with the at least one first network (1₁, ..., 1_{N}) in each case and one of the first encryption and decryption units (6₁, 6₂, ..., 6_{N}) and the multiplexers or demultiplexers (5, 10) provided for alternative interconnection of one of the first encryption and decryption units (6₁, 6₂, ..., 6_{N}) associated with a second network (15₁, 15₂, ..., 15_{N}) in each case and a physical transmission channel (11) are incorporated in the single device (100).

19. System according to claim 18,
**characterized**
**in that** the single device (100) additionally incorporates the multiplexers or demultiplexers provided for alternative interconnection of the physical transmission channel (11) and one of the network interfaces (9₁, 9₂, ..., 9_{N}) associated with a second network (15₁, 15₂, ..., 15_{N}) in each case and the network interfaces (9₁, 9₂, ..., 9_{N}) associated with each second network in each case.

20. Computer program having program code means in order to be able to perform all steps according to any of claims 1 to 12 when the program is executed on a computer, a digital signal processor or on other programmable components.

21. Computer program product having program code means, in particular stored on a machine-readable storage medium, in order to be able to perform all steps according to any of claims 1 to 12 when the program is executed on a computer, a digital signal processor or other programmable components.

## Revendications

1. Procédé de transmission d'un paquet de données chiffré d'au moins un premier réseau (1₁, ..., 1_{N})sans sécurité de transmission à au moins un deuxième réseau (15₁, 15₂, ..., 15_{N}) avec une sécurité de transmission spécifique comprenant les étapes de procédé suivantes :
• la transmission du paquet de données chiffré d'une interface de réseau (2₁, ..., 2_{N}) du premier réseau (1₁, ..., 1_{N}) à une première unité de chiffrement et de déchiffrement (6₁, 6₂, ..., 6_{N}) faisant partie du deuxième réseau (15₁, 15₂, ..., 15_{N}),
• le déchiffrement du paquet de données chiffré dans la première unité de chiffrement et de déchiffrement (6₁, 6₂, ..., 6_{N}) par un premier chiffrement, qui correspond à la sécurité de transmission spécifique du deuxième réseau (15₁, 15₂, ..., 15_{N}),
• la transmission du paquet de données déchiffré de la première unité de chiffrement et de déchiffrement (6₁, 6₂, ..., 6_{N}) à une interface de réseau (9₁, 9₂, ..., 9_{N}) faisant partie du deuxième réseau (15₁, 15₂, ..., 15_{N}),
dans lequel, pour la transmission inviolable et correcte du paquet de données sur un canal de transmission logique entre la première unité de chiffrement et de déchiffrement (6₁, 6₂, ..., 6_{N}) correcte et l'interface de réseau (9₁, 9₂, ..., 9_{N}) correcte du deuxième réseau (15₁, 15₂, ..., 15_{N}), un deuxième chiffrement, faisant partie du canal de transmission logique, du paquet de données s'effectue,
**caractérisé**
**en ce que**, pour repérer une manipulation du deuxième chiffrement du paquet de données transmis dans le canal de transmission logique, une fonction de hachage est intégrée dans le deuxième chiffrement,
**en ce que** les données du paquet de données à transmettre sur le canal de transmission logique sont amenées à la fonction de hachage et le résultat de la fonction de hachage est amené conjointement avec les données du paquet de données transmis dans le canal de transmission logique au deuxième chiffrement,
**en ce que**, pour une individualisation du deuxième chiffrement de chaque paquet de données individuel, une valeur de séquence faisant partie du paquet de données concerné intervient dans le deuxième chiffrement du paquet de données concerné, et
**en ce que**, par une utilisation d'une donnée d'initialisation lors du procédé de chiffrement du deuxième chiffrement, une individualisation additionnelle du deuxième chiffrement de chaque paquet de données individuel transmis est obtenue.

2. Procédé de transmission d'un paquet de données d'au moins un deuxième réseau (15₁, 15₂, ..., 15_{N}) avec une sécurité de transmission spécifique à l'au moins un premier réseau (1₁, ..., 1_{N}) sans sécurité de transmission comprenant les étapes de procédé suivantes :
• la transmission d'un paquet de données d'une interface de réseau (9₁, 9₂, ..., 9_{N}) faisant partie du deuxième réseau (15₁, 15₂, ..., 15_{N}) à une première unité de chiffrement et de déchiffrement (6₁, 6₂, ..., 6_{N}) faisant partie du deuxième réseau (15₁, 15₂, ..., 15_{N}),
• le déchiffrement du paquet de données dans la première unité de chiffrement et de déchiffrement (6₁, 6₂, ..., 6_{N}) avec un premier chiffrement conformément à la sécurité de transmission spécifique du deuxième réseau (15₁, 15₂, ..., 15_{N}),
• la transmission du paquet de données de la première unité de chiffrement et de déchiffrement (6₁, 6₂, ..., 6_{N}) faisant partie du deuxième réseau (15₁, 15₂, ..., 15_{N}) à une interface de réseau (2₁, ..., 2_{N}) du premier réseau (1₁, ..., 1_{N}),
dans lequel, pour la transmission inviolable et correcte du paquet de données sur un canal de transmission logique entre l'interface de réseau (9₁, 9₂, ..., 9_{N}) correcte et la première unité de chiffrement et de déchiffrement (6₁, 6₂, ..., 6_{N}) correcte du deuxième réseau (15₁, 15₂, ..., 15_{N}), un deuxième chiffrement, faisant partie du canal de transmission logique, du paquet de données s'effectue,
**caractérisé**
**en ce que**, pour repérer une manipulation du deuxième chiffrement du paquet de données transmis dans le canal de transmission logique, une fonction de hachage est intégrée dans le deuxième chiffrement,
**en ce que** les données du paquet de données à transmettre sur le canal de transmission logique sont amenées à la fonction de hachage et le résultat de la fonction de hachage est amené conjointement avec les données du paquet de données transmis dans le canal de transmission logique au deuxième chiffrement,
**en ce que**, pour une individualisation du deuxième chiffrement de chaque paquet de données individuel, une valeur de séquence faisant partie du paquet de données concerné intervient dans le deuxième chiffrement du paquet de données concerné, et
**en ce que**, par une utilisation d'une donnée d'initialisation lors du procédé de chiffrement du deuxième chiffrement, une individualisation additionnelle du deuxième chiffrement de chaque paquet de données individuel transmis est obtenue.

3. Procédé selon la revendication 1 ou 2,
**caractérisé**
**en ce que**, pour le deuxième chiffrement du paquet de données dans le canal de transmission logique du deuxième réseau (15₁, 15₂, ..., 15_{N}) concerné, une clé faisant partie du canal de transmission logique du deuxième réseau (15₁, 15₂, ..., 15_{N}) concerné est utilisée, que l'interface de réseau (9₁, 9₂, ..., 9_{N}) et la première unité de chiffrement et de déchiffrement (6₁, 6₂, ..., 6_{N}) du deuxième réseau (15₁, 15₂, ..., 15_{N}) connaissent.

4. Procédé selon l'une quelconque des revendications 1 à 3,
**caractérisé**
**en ce que** le deuxième chiffrement du paquet de données dans le canal de transmission logique de chaque deuxième réseau (15₁, 15₂, ..., 15_{N}) s'effectue avec le même procédé de chiffrement.

5. Procédé selon l'une quelconque des revendications 1 à 3, **carac**
**térisé**
en ce que le deuxième chiffrement du paquet de données dans le canal de transmission logique pour chaque deuxième réseau (15₁, 15₂, ..., 15_{N}) utilise respectivement un procédé de chiffrement différent.

6. Procédé selon l'une quelconque des revendications 1 à 5,
**caractérisé**
**en ce que** le deuxième chiffrement du paquet de données dans le canal de transmission logique de chaque deuxième réseau (15₁, 15₂, ..., 15_{N}) s'effectue dans un mode de chiffrement de transport.

7. Procédé selon l'une quelconque des revendications 1 à 6,
**caractérisé**
**en ce que** l'adresse de l'interface de réseau (9₁, 9₂, ..., 9_{N}) faisant partie du deuxième réseau (15₁, 15₂, ..., 15_{N}) concerné est intégrée en plus dans le deuxième chiffrement.

8. Procédé selon la revendication 7,
**caractérisé**
**en ce que**, pour les données du paquet de données à transmettre sur le canal de transmission logique, l'adresse de l'interface de réseau (9₁, 9₂, ..., 9_{N}) faisant partie du deuxième réseau (15₁, 15₂, ..., 15_{N}) concerné est amenée à la fonction de hachage et le résultat de la fonction de hachage est amené conjointement avec les données du paquet de données transmis dans le canal de transmission logique au deuxième chiffrement et à l'adresse de l'interface de réseau (9₁, 9₂, ..., 9_{N}) faisant partie du deuxième réseau concerné.

9. Procédé selon la revendication 7,
**caractérisé**
**en ce que**, pour le deuxième chiffrement, une clé modifiée est utilisée, qui est obtenue à partir d'un deuxième chiffrement de l'adresse, cette adresse fait partie du deuxième réseau (15₁, 15₂, ..., 15_{N}) concerné avec la clé faisant partie du deuxième réseau (15₁, 15₂, ..., 15_{N}) concerné.

10. Procédé selon la revendication 1 ou 2,
**caractérisé**
**en ce que** la valeur de séquence est une valeur individuelle de numérateur ou une valeur individuelle de temps.

11. Procédé selon la revendication 1, 2 ou 10,
**caractérisé**
**en ce que**, pour l'individualisation du deuxième chiffrement de chaque paquet de données individuel, une clé modifiée est utilisée, qui est obtenue à partir du chiffrement de la valeur de séquence faisant partie du paquet de données concerné avec la clé qui fait partie du deuxième réseau (15₁, 15₂, ..., 15_{N}) concerné.

12. Procédé selon la revendication 1, 2 ou 10,
**caractérisé**
**en ce que**, pour l'individualisation du deuxième chiffrement de chaque paquet de données individuel, la valeur de séquence faisant partie du paquet de données concerné et une valeur de hachage de la valeur de séquence sont chiffrées au moyen des données du paquet de données.

13. Système de transmission d'un paquet de données entre au moins un premier réseau (1₁, ..., 1_{N})sans sécurité de transmission et de plusieurs deuxièmes réseaux (15₁, 15₂, ..., 15_{N}) avec respectivement une sécurité de transmission spécifique avec une interface de réseau (2₁, ..., 2_{N}) faisant partie respectivement de l'au moins un premier réseau (1₁, ..., 1_{N}), plusieurs premières unités de chiffrement et de déchiffrement (6₁, 6₂, ..., 6_{N}) faisant partie de respectivement un des deuxièmes réseaux (15₁, 15₂, ..., 15_{N}), qui peuvent être connectées respectivement en alternance à l'interface de réseau (2₁, ..., 2_{N}) du premier réseau (1₁, ..., 1_{N}), plusieurs interfaces de réseau (9₁, 9₂, ..., 9_{N}) faisant partie de respectivement un des deuxièmes réseaux (15₁, 15₂, ..., 15_{N}) et un canal de transmission physique (11), qui peut être connecté en alternance à une première unité de chiffrement et de déchiffrement (6₁, 6₂, ..., 6_{N}) et à une interface de réseau (9₁, 9₂, ..., 9_{N}) de respectivement un des deuxièmes réseaux (15₁, 15₂, ..., 15_{N}),
dans lequel, pour chaque interface de réseau (9₁, 9₂, ..., 9_{N}) faisant partie de respectivement un deuxième réseau (15₁, 15₂, ..., 15_{N}) et dans chaque première unité de chiffrement et de déchiffrement (6₁, 6₂, ..., 6_{N}) faisant partie de respectivement un deuxième réseau (15₁, 15₂, ..., 15_{N}), respectivement une deuxième unité de chiffrement et de déchiffrement (7₁, 7₂, ..., 7_{N}) destinée au deuxième chiffrement du paquet de données pour la transmission inviolable et correcte du paquet de données sur un canal de transmission logique entre l'interface de réseau (9₁, 9₂, ..., 9_{N}) correcte et la première unité de chiffrement et de déchiffrement (6₁, 6₂, ..., 6_{N}) correcte du deuxième réseau (15₁, 15₂, ..., 15N) est prévue,
**caractérisé**
**en ce qu'**une fonction de hachage destinée à repérer une manipulation du deuxième chiffrement du paquet de données transmis dans le canal de transmission logique est intégrée dans la respectivement deuxième unité de chiffrement et de déchiffrement (7₁, 7₂, ..., 7_{N}),
**en ce que** la fonction de hachage intégrée dans la deuxième unité de chiffrement et de déchiffrement (7₁, 7₂, ..., 7_{N}) calcule à partir de données du paquet de données à transmettre sur le canal de transmission logique un résultat, qui est amené, conjointement avec les données du paquet de données à transmettre dans canal de transmission logique, au deuxième chiffrement,
**en ce que**, pour une individualisation du deuxième chiffrement de chaque paquet de données individuel à transmettre dans le canal de transmission logique, une valeur de séquence faisant partie du paquet de données concerné est générée dans la deuxième unité de chiffrement et de déchiffrement (7₁, 7₂, ..., 7_{N}), qui est chiffrée avec une clé utilisée dans la deuxième unité de chiffrement et de déchiffrement (7₁, 7₂, ..., 7_{N}) concernée et le deuxième chiffrement individuel du paquet de données respectivement à transmettre est chiffré avec la clé modifiée obtenue de cette manière, et
**en ce que**, pour l'individualisation additionnelle dans la deuxième unité de chiffrement et de déchiffrement (7₁, 7₂, ..., 7_{N}), une donnée individuelle d'initialisation est générée, laquelle, lors de la détermination de la clé initiale et/ou de la clé modifiée, est prise en compte dans le procédé de chiffrement du deuxième chiffrement de chaque paquet de données individuel.

14. Système selon la revendication 13,
**caractérisé**
**en ce que** la deuxième unité de chiffrement et de déchiffrement (7₁, 7₂, ..., 7_{N}) est intégrée dans la première unité de chiffrement et de déchiffrement (6₁, 6₂, ..., 6_{N}) associée et dans l'interface de réseau (9₁, 9₂, ..., 9_{N}) associée du deuxième réseau (15₁, 15₂,..., 15_{N}) concerné.

15. Système selon la revendication 13,
**caractérisé**
**en ce que** les deuxièmes unités de chiffrement et de déchiffrement (7₁, 7₂, ..., 7_{N}) sont connectées en aval des premières unités de chiffrement et de déchiffrement (6₁, 6₂, ..., 6_{N}) respectivement associées en direction du canal de transmission physique (11).

16. Système selon l'une quelconque des revendications 13 à 15,
**caractérisé**
**en ce que**, pour la connexion alternative de l'interface de réseau (2₁, ..., 2_{N}) faisant partie respectivement de l'au moins un premier réseau (1₁, ..., 1_{N}) à l'une des premières unités de chiffrement et de déchiffrement (6₁, 6₂, ..., 6_{N}), pour la connexion alternative d'une première ou deuxième unité de chiffrement et de déchiffrement (6₁, 6₂, ..., 6_{N}, 7₁, 7₂, ..., 7_{N}) faisant partie respectivement d'un deuxième réseau (15₁, 15₂, ..., 15_{N}) au canal de transmission physique (11) et pour la connexion alternative du canal de transmission physique (11) à une interface de réseau (9₁, 9₂, ..., 9_{N}) faisant partie de respectivement un deuxième réseau (15₁, 15₂, ..., 15_{N}), respectivement un multiplexeur ou démultiplexeur (3, 5, 10, 12) est prévu.

17. Système selon l'une quelconque des revendications 13 à 16,
**caractérisé**
**en ce que** toutes les premières unités de chiffrement et de déchiffrement (6₁, 6₂, ..., 6_{N}) sont intégrées dans un appareil (100) unique.

18. Système selon la revendication 16,
**caractérisé**
**en ce que** les multiplexeurs ou démultiplexeurs (5, 10) prévus pour la connexion alternative de l'interface de réseau (2₁, ..., 2_{N}) faisant partie respectivement de l'au moins un premier réseau (1₁, ..., 1_{N}) à l'une des premières unités de chiffrement et de déchiffrement (6₁, 6₂, ..., 6_{N}) et pour la connexion alternative d'une des premières unités de chiffrement et de déchiffrement (6₁, 6₂, ..., 6_{N}) faisant partie du respectivement un deuxième réseau (15₁, 15₂, ..., 15_{N}) au canal de transmission physique (11) sont intégrés dans l'appareil (100) unique.

19. Système selon la revendication 18,
**caractérisé**
**en ce que**, en plus, les multiplexeurs ou démultiplexeurs prévus pour la connexion alternative du canal de transmission physique (11) à l'une des interfaces de réseau (9₁, 9₂, ..., 9_{N}) faisant partie de respectivement un deuxième réseau (15₁, 15₂, ..., 15_{N}) et les interfaces de réseau (9₁, 9₂, ..., 9_{N}) faisant partie respectivement de chaque deuxième réseau sont intégrés dans l'appareil (100) unique.

20. Programme informatique comprenant des moyens formant code de programme, afin de pouvoir effectuer toutes les étapes selon l'une quelconque des revendications 1 à 12, lorsque le programme est exécuté sur un ordinateur, un processeur de signal numérique ou sur d'autres composants programmables.

21. Produit-programme informatique comprenant des moyens formant code de programme mis en mémoire en particulier sur un support lisible par machine, afin de pouvoir effectuer toutes les étapes selon l'une quelconque des revendications 1 à 12, lorsque le programme est exécuté sur un ordinateur, un processeur de signal numérique ou d'autres composants programmables.
